# EUROPEAN PATENT APPLICATION

(11) **EP 4 654 359 A1**
(43) Date of publication of application: **26.11.2025**
(21) Application number: 23950474.9
(22) Date of filing: 24.11.2023
(51) Int. Cl.: H01M 50/30, H01M 10/0525

(54) **BATTERY CELL, BATTERY, AND ELECTRIC DEVICE**

(30) Priority: 01.09.2023 CN 202311119999
(71) Applicant: Contemporary Amperex Technology Co., Limited, Ningde, Fujian 352100 (CN)
(72) Inventor: CHEN, Xinxiang, Ningde, Fujian 352100 (CN); YANG, Rui, Ningde, Fujian 352100 (CN); HUANG, Shoujun, Ningde, Fujian 352100 (CN); ZHENG, Yulian, Ningde, Fujian 352100 (CN); WANG, Peng, Ningde, Fujian 352100 (CN)
(74) Representative: Lorenz Seidler Gossel Part. mbB
(86) International application number: PCT/CN2023/134069
(87) International publication number: WO 2025/043904

(57) **Abstract**

Embodiments of the present application provide a battery cell, a battery, and an electric device. The battery cell includes a casing, a first pressure relief mechanism, and a second pressure relief mechanism. The casing is configured to accommodate an electrode assembly. The first pressure relief mechanism and the second pressure relief mechanism are disposed on the casing at an interval, and the first pressure relief mechanism is started earlier than the second pressure relief mechanism. When the battery cell goes into thermal runaway, the first pressure relief mechanism is firstly started, such that a discharge medium positioned near the first pressure relief mechanism in the casing can be discharged through the first pressure relief mechanism; and as pressure in the casing is continuously increased and/or the started first pressure relief mechanism is blocked by the discharge medium, the second pressure relief mechanism is started, such that discharging of the discharge medium in the casing can be continued through the second pressure relief mechanism, thereby reducing the risk of aggravated thermal runaway reaction caused by heat and air pressure accumulation in the casing, and improving the reliability of the battery cell.

## Description

### CROSS-REFERENCE TO RELATED APPLICATIONS

The present application claims priority to Chinese Patent Application (No. 2023111199997), filed on September 01, 2023 and entitled "BATTERY CELL, BATTERY AND ELECTRIC DEVICE", which is incorporated herein by reference in its entirety.

### TECHNICAL FIELD

The present application relates to the field of battery technologies, and in particular, to a battery cell, a battery, and an electric device.

### BACKGROUND

Batteries are widely used in electronic devices, such as mobile phones, notebook computers, electric bicycles, electric vehicles, electric airplanes, electric ships, electric toy cars, electric toy ships, electric toy airplanes, electric tools, etc.

In battery technology, a pressure relief mechanism may be disposed in a battery cell, and pressure is relieved by using the pressure relief mechanism when the battery cell goes into thermal runaway. For a general battery cell, there is still a case where the pressure relief is not timely, and the reliability of the battery cell is relatively poor. Therefore, how to improve the reliability of battery cells is a technical problem that urgently needs to be solved in battery technology.

### SUMMARY

Embodiments of the present application provide a battery cell, a battery, and an electric device, which can effectively improve the reliability of the battery cell.

In a first aspect, embodiments of the present application provide a battery cell, including a casing, a first pressure relief mechanism, and a second pressure relief mechanism, where the casing is configured to accommodate an electrode assembly, the first pressure relief mechanism and the second pressure relief mechanism are disposed in the casing at an interval, and the first pressure relief mechanism is started earlier than the second pressure relief mechanism.

In the above technical solution, the casing is provided with the first pressure relief mechanism and the second pressure relief mechanism, and the first pressure relief mechanism is started earlier than the second pressure relief mechanism. When the battery cell goes into thermal runaway, the first pressure relief mechanism may be firstly started, and a discharge medium inside the casing near the first pressure relief mechanism may be discharged through the first pressure relief mechanism. As pressure inside the casing is continuously increased and/or the firstly started pressure relief mechanism is blocked by the discharge medium, the second pressure relief mechanism may be started, and the discharge medium inside the casing may continue to be discharged through the second pressure relief mechanism, reducing the risk of aggravated thermal runaway reaction caused by heat and air pressure accumulation inside the casing, and improving the reliability of the battery cell.

In some embodiments, a starting pressure of the first pressure relief mechanism is P₁, a starting pressure of the second pressure relief mechanism is P₂, and P₂-P₁ ≥ 0.02 MPa. This results in a certain pressure difference between the starting pressure of the second pressure relief mechanism and the starting pressure of the first pressure relief mechanism, which is beneficial for realizing that the first pressure relief mechanism is started earlier than the second pressure relief mechanism.

In some embodiments, 0.05 Mpa ≤ P₂-P₁ ≤ 0.5 Mpa. When P₂-P₁ ≥ 0.05 MPa, the pressure difference between the starting pressure of the second pressure relief mechanism and the starting pressure of the first pressure relief mechanism is further increased, delaying the opening of the second pressure relief mechanism. When P₂-P₁ ≤ 0.5 MPa, the pressure difference between the starting pressure of the second pressure relief mechanism and the starting pressure of the first pressure relief mechanism is not too large, reducing the risk of the casing being damaged before the second pressure relief mechanism is started.

In some embodiments, the casing includes a first wall portion, the first wall portion supports the electrode assembly along a gravitational direction, and at least one of the first pressure relief mechanism and the second pressure relief mechanism is disposed on the first wall portion. Since the first wall portion is the wall that supports the electrode assembly in the casing, the first wall portion is pressed by the electrode assembly, and the region inside the casing near the first wall portion is more likely to be blocked and cause air stagnation, which is not conducive to the discharge of the discharge medium. However, disposing at least one of the first pressure relief mechanism and the second pressure relief mechanism on the first wall portion is more conducive to the discharge of the discharge medium inside the casing near the first wall portion, improving the reliability of the battery cell.

In some embodiments, the first pressure relief mechanism is disposed on the first wall portion. The discharge medium inside the casing near the first wall portion may be discharged through the first pressure relief mechanism that is firstly started, achieving timely pressure relief of the battery cell.

In some embodiments, the casing includes a shell and two end caps. Openings are formed at two opposite ends of the shell. The two end caps separately close the openings at the two ends of the shell. The first wall portion is formed on the shell. The shell may provide more space for the pressure relief mechanism disposed on the first wall portion, reducing the molding difficulty of the pressure relief mechanism.

In some embodiments, both the first pressure relief mechanism and the second pressure relief mechanism are disposed on the first wall portion. In this way, the shell has a stronger pressure relief capability, enabling the discharge medium inside the casing near the first wall portion to be discharged more quickly. When the battery cell goes into thermal runaway, the discharge medium inside the casing may be discharged from the side of the shell, reducing the risk of damage to external components located outside the end caps caused by the discharge.

In some embodiments, one of the first pressure relief mechanism and the second pressure relief mechanism is disposed on the first wall portion, and the other is disposed on one end cap. In this way, both the shell and one end cap have pressure relief capabilities. When the battery cell goes into thermal runaway and both the first pressure relief mechanism and the second pressure relief mechanism are started, the discharge medium inside the battery cell may be discharged from the side and the end of the casing.

In some embodiments, the two end caps are oppositely disposed along a first direction. The electrode assembly includes a main body portion and a tab. Along the first direction, at least one end of the main body portion is provided with the tab. The shell includes a second wall portion, the second wall portion is disposed opposite to the first wall portion, the first wall portion supports the main body portion along the gravitational direction, a channel gap is formed between the second wall portion and the main body portion, the channel gap is configured to communicate spaces inside the casing at two ends of the main body portion along the first direction, and the first direction intersects with the gravitational direction. Since a channel gap is formed between the second wall portion and the main body portion, and the channel gap communicates spaces inside the casing at the two ends of the main body portion along the first direction, the discharge medium inside the casing at the two ends of the main body portion may flow between each other through the channel gap, which is beneficial for the rapid discharge of the discharge medium inside the casing. For example, both the first pressure relief mechanism and the second pressure relief mechanism are disposed on the first wall portion, or the first pressure relief mechanism is disposed on the end cap and the second pressure relief mechanism is disposed on the first wall portion. When the first pressure relief mechanism is started and the second pressure relief mechanism is not started, the discharge medium accumulated near one end of the main body portion close to the first pressure relief mechanism may be discharged through the first pressure relief mechanism, and the discharge medium accumulated near the end of the main body portion far away from the first pressure relief mechanism may flow through the channel gap to the end of the main body portion close to the first pressure relief mechanism, and finally be discharged through the first pressure relief mechanism, enabling the discharge medium inside the battery cell to be discharged quickly, thereby improving the timeliness of pressure relief of the battery cell.

In some embodiments, the casing includes a shell and an end cap; an opening is formed at one end of the shell; and the end cap closes the opening, where the end cap is the first wall portion; or a wall portion of the shell opposite to the end cap is the first wall portion. If the end cap is the first wall portion, the end cap is located at a bottom of the casing and supports the electrode assembly. When the battery cell goes into thermal runaway, the discharge medium inside the casing may be discharged through the end cap at the bottom of the casing. If the wall portion of the shell opposite to the end cap is the first wall portion, the wall portion is located at the bottom of the casing and supports the electrode assembly. When the battery cell goes into thermal runaway, the discharge medium inside the casing may be discharged through the wall portion at the bottom of the casing.

In some embodiments, one of the first pressure relief mechanism and the second pressure relief mechanism is disposed on the end cap, and the other is disposed on the wall portion of the shell opposite to the end cap. When the battery cell goes into thermal runaway, the discharge medium accumulated at the two ends of the electrode assembly inside the casing may be quickly discharged from the two opposite ends of the casing, enhancing the pressure relief capability of the battery cell.

In some embodiments, the casing includes a shell and an end cap. Along the first direction, at least one end of the shell is formed with an opening, the end caps correspond to the openings one-to-one, and the end caps close the openings. The casing has a first half-region and a second half-region. Along the first direction, a portion from a middle cross-section of the casing to one end of the casing is the first half-region, and a portion from the middle cross-section of the casing to the other end of the casing is the second half-region, and the middle cross-section is perpendicular to the first direction, where the first pressure relief mechanism is disposed in the first half-region, and the second pressure relief mechanism is disposed in the second half-region. In this way, both the first half-region and the second half-region of the shell are provided with pressure relief mechanisms. After the first pressure relief mechanism is started, the discharge medium in the first half-region may be discharged through the first pressure relief mechanism. After the second pressure relief mechanism is started, the discharge in the second half-region may be discharged through the second pressure relief mechanism, improving the timeliness of pressure relief of the battery cell.

In some embodiments, along the first direction, a length of the casing is L, and L ≥ 80 mm. In this way, is beneficial for meeting the requirement of large capacity of the battery cell. In addition, when L ≥ 80 mm, disposing the first pressure relief mechanism and the second pressure relief mechanism in the first half-region and the second half-region separately may alleviate the situation of untimely pressure relief of the battery cell.

In some embodiments, along the first direction, openings are formed at two opposite ends of the shell, two end caps respectively close the openings at the two ends of the shell, and the two end caps are separately located in the first half-region and the second half-region. The first pressure relief mechanism and the second pressure relief mechanism are separately disposed on the two end caps; or both the first pressure relief mechanism and the second pressure relief mechanism are disposed on the shell; or the first pressure relief mechanism is disposed on the end cap located in the first half-region, and the second pressure relief mechanism is disposed on a portion of the shell located in the second half-region; or the first pressure relief mechanism is disposed on a portion of the shell located in the first half-region, and the second pressure relief mechanism is disposed on the end cap located in the second half-region. If the first pressure relief mechanism and the second pressure relief mechanism are separately disposed on the two end caps, the discharge medium accumulated at the two ends of the electrode assembly inside the casing may be quickly discharged from the two opposite ends of the casing. If both the first pressure relief mechanism and the second pressure relief mechanism are disposed on the shell, the discharge medium inside the casing may be discharged from the side of the casing, reducing the risk of damage to external components located outside the end caps caused by the discharge. If one of the first pressure relief mechanism and the second pressure relief mechanism is disposed on the end cap and the other is disposed on the shell, the discharge medium inside the casing may be discharged from the side and the end of the casing.

In some embodiments, the battery cell further includes a first electrode terminal and a second electrode terminal with opposite polarities, both the first electrode terminal and the second electrode terminal are electrically connected to the electrode assembly, and the first electrode terminal and the second electrode terminal are separately disposed on the two end caps. The first electrode terminal and the second electrode terminal are separately disposed on the two end caps, reducing the risk of interference between the first electrode terminal and the second electrode terminal during the assembly process, and reducing the risk of short-circuiting between the first electrode terminal and the second electrode terminal.

In some embodiments, along the first direction, the opening is formed at one end of the shell, one of the first pressure relief mechanism and the second pressure relief mechanism is disposed on the end cap, and the other is disposed on the shell. In this way, both the shell and the end cap have pressure relief capabilities. When the battery cell goes into thermal runaway, the discharge inside the battery cell may be discharged from different directions.

**In** some embodiments, along the first direction, the shell includes a first wall portion disposed opposite to the end cap. One of the end cap and the first wall portion is located in the first half-region, and the other is located in the second half-region. One of the first pressure relief mechanism and the second pressure relief mechanism is disposed on the end cap, and the other is disposed on the first wall portion. When the battery cell goes into thermal runaway, the discharge medium accumulated at the two ends of the electrode assembly inside the casing may be quickly discharged from the two opposite ends of the casing, enhancing the pressure relief capability of the battery cell.

In some embodiments, the battery cell further includes a first electrode terminal and a second electrode terminal with opposite polarities, both the first electrode terminal and the second electrode terminal are electrically connected to the electrode assembly, and both the first electrode terminal and the second electrode terminal are disposed on the end cap. This reduces the assembly difficulty of the first electrode terminal and the second electrode terminal, and makes it easier to electrically connect the first electrode terminal and the second electrode terminal with external components. In addition, the first electrode terminal and the second electrode terminal may share the space of the end cap with the pressure relief mechanism on the end cap, and the pressure relief mechanism does not need to occupy more space outside the end cap.

In some embodiments, the casing includes a first wall portion. Both the first pressure relief mechanism and the second pressure relief mechanism are disposed on the first wall portion. The first pressure relief mechanism is provided with a first scoring groove, and the second pressure relief mechanism is provided with a second scoring groove. The first scoring groove and the second scoring groove are disposed at an interval along the first direction. Along the first direction, the length of the casing is L, a maximum span of the first scoring groove is L₁, and a maximum span of the second scoring groove is L₂, and 0.2 ≤ (L₁+L₂)/L ≤ 0.6. (L₁+L₂)/L ≥ 0.2 is beneficial for increasing a total pressure relief area of the first pressure relief mechanism and the second pressure relief mechanism on the first wall portion, and is beneficial for improving the pressure relief rate of the battery cell. When (L₁+L₂)/L ≤ 0.6, a sum of the maximum spans of the first scoring groove and the second scoring groove along the first direction is not too large, reducing sizes of the first pressure relief mechanism and the second pressure relief mechanism along the first direction, which is beneficial for improving the strength of the first wall portion.

In some embodiments, the casing includes the first wall portion, both the first pressure relief mechanism and the second pressure relief mechanism are disposed on the first wall portion, the first wall portion has a first outer surface facing away from the electrode assembly, an area of the first outer surface is S, a predetermined pressure relief area of the first pressure relief mechanism is S₁, and a predetermined pressure relief area of the second pressure relief mechanism is S₂, satisfying: 0.05 ≤ (S₁+S₂)/S ≤ 0.55. When (S₁+S₂)/S ≥ 0.05, the total pressure relief area of the first pressure relief mechanism and the second pressure relief mechanism is larger, which is beneficial for improving the pressure relief rate of the battery cell and the timeliness of pressure relief of the battery cell; and (S₁+S₂)/S ≤ 0.55 is beneficial for improving the strength of the first wall portion.

In some embodiments, 0.15 ≤ (S₁+S₂)/S ≤ 0.35.

In some embodiments, the first pressure relief mechanism includes a first weak region and a first pressure relief region, the first pressure relief region is configured to be opened when the first weak region cracks, and an area of the first pressure relief region is S₁. When the first pressure relief mechanism is started, the first pressure relief region can be opened with the first weak region as the boundary, increasing the pressure relief area of the first pressure relief mechanism.

In some embodiments, the first pressure relief mechanism is provided with the first scoring groove, and the first pressure relief mechanism forms the first weak region in a region provided with the first scoring groove. The first weak region is formed by disposing the first scoring groove on the first pressure relief mechanism, and the forming method of the first weak region is simple, reducing the forming difficulty of the first weak region.

In some embodiments, the first scoring groove is a groove extending along a closed trajectory, and the first scoring groove is disposed around the first pressure relief region. During the opening process of the first pressure relief mechanism, the first pressure relief region may be separated from the casing, increasing the pressure relief area of the first pressure relief mechanism and improving the pressure relief rate of the battery cell.

In some embodiments, the second pressure relief mechanism includes a second weak region and a second pressure relief region, the second pressure relief region is configured to be opened when the second weak region cracks, and an area of the second pressure relief region is S₂. When the second pressure relief mechanism is started, the second pressure relief region can be opened with the second weak region as the boundary, increasing the pressure relief area of the second pressure relief mechanism.

In some embodiments, the second pressure relief mechanism is provided with a second scoring groove, and the second pressure relief mechanism forms the second weak region in a region provided with the second scoring groove. The second weak region is formed by disposing the second scoring groove on the second pressure relief mechanism, and the forming method of the second weak region is simple, reducing the forming difficulty of the second weak region.

In some embodiments, the second scoring groove is a groove extending along a closed trajectory, and the second scoring groove is disposed around the second pressure relief region. During the opening process of the second pressure relief mechanism, the second pressure relief region may be separated from the casing, increasing the pressure relief area of the second pressure relief mechanism and improving the pressure relief rate of the battery cell.

In some embodiments, the predetermined pressure relief area of the first pressure relief mechanism is S₁, and the predetermined pressure relief area of the second pressure relief mechanism is S₂, satisfying: S₁-S₂ ≥ 50 mm². In this way, it is beneficial for realizing that the first pressure relief mechanism is started the valve earlier than the second pressure relief mechanism. When the battery cell goes into thermal runaway, pressure may be relieved first through the first pressure relief mechanism with a larger pressure relief area, reducing the risk of a rapid increase in pressure or temperature inside the casing and improving the reliability of the battery cell.

In some embodiments, S₁-S₂ ≥ 100 mm².

In a second aspect, embodiments of the present application provide a battery, including the battery cell provided in any one of the embodiments of the first aspect.

In a third aspect, embodiments of the present application provide an electric device, including the battery cell provided in any one of the embodiments of the first aspect, where the battery cell is configured to provide electrical energy for the electric device.

### DESCRIPTION OF DRAWINGS

To describe the technical solutions in the embodiments of the present application more clearly, the following briefly describes the accompanying drawings required for describing the embodiments. It should be understood that the following accompanying drawings show only some embodiments of the present application, and therefore should not be considered as a limitation on the scope. A person of ordinary skill in the art may further obtain other related accompanying drawings according to these accompanying drawings without creative efforts.
FIG. 1 is a schematic structural diagram of a vehicle according to some embodiments of the present application;
FIG. 2 is an exploded view of a battery according to some embodiments of this application.
FIG. 3 is an exploded view of a battery cell according to some embodiments of this application.
FIG. 4 is a cross-sectional view of the battery cell shown in FIG. 3;
FIG. 5 is a view in a direction A of the battery cell shown in FIG. 4;
FIG. 6 is an exploded view of a battery cell provided in some other embodiments of the present application;
FIG. 7 is a cross-sectional view of the battery cell shown in FIG. 6;
FIG. 8 is a schematic structural diagram of a shell shown in FIG. 7;
FIG. 9 is an axonometric view of a battery cell (with an opening formed at one end of a shell) provided in some embodiments of the present application;
FIG. 10 is an exploded view of the battery cell shown in FIG. 9;
FIG. 11 is a schematic structural diagram of a shell shown in FIG. 10;
FIG. 12 is an axonometric view of a battery cell (with an opening formed at one end of a shell) provided in some other embodiments of the present application;
FIG. 13 is an axonometric view of a battery cell (with openings formed at two opposite ends of a shell) provided in some embodiments of the present application;
FIG. 14 is an axonometric view of a battery cell (with openings formed at two opposite ends of a shell) provided in some other embodiments of the present application;
FIG. 15 is an axonometric view of a battery cell (with openings formed at two opposite ends of a shell) provided in still some other embodiments of the present application;
FIG. 16 is an axonometric view of a battery cell (with openings formed at two opposite ends of a shell) provided in yet some other embodiments of the present application;
FIG. 17 is a schematic structural diagram of a casing provided in some embodiments of the present application;
FIG. 18 is a cross-sectional view taken along a line B-B of the casing shown in FIG. 17;
FIG. 19 is a partially enlarged view of an area C of the casing shown in FIG. 18;
FIG. 20 is a partial view of a first wall portion provided in some embodiments of the present application;
FIG. 21 is a partial view of a first wall portion provided in some other embodiments of the present application; and
FIG. 22 is a partial view of a first wall portion provided in still some other embodiments of the present application.

Reference numerals: 1-casing; 1a-first half-region; 1b-second half-region; 11-shell; 12-end cap; 13-first wall portion; 131-first outer surface; 14-second wall portion; 15-third wall portion; 151-second outer surface; 16-fourth wall portion; 161-third outer surface; 17-channel gap; 171-first space; 172-second space; 18-fifth wall portion; 2-electrode assembly; 21-main body portion; 22-tab; 3-pressure relief mechanism; 31-first pressure relief mechanism; 311-first scoring groove; 3111-first arc segment; 3112-first straight line segment; 3113-second straight line segment; 3114-third straight line segment; 3115-fourth straight line segment; 3116-fifth straight line segment; 3117-first connecting line; 3118-second connecting line; 312-first weak region; 313-first pressure relief region; 32-second pressure relief mechanism; 321-second scoring groove; 4-electrode terminal; 41-first electrode terminal; 42-second electrode terminal; 5-current collecting member; 10-battery cell; 20-box body; 201-first portion; 202-second portion; 100-battery; 200-controller; 300-motor; 1000-vehicle; W-middle cross-section; X-first direction; Y-second direction; and Z-third direction.

### DESCRIPTION OF EMBODIMENTS

To make the objectives, technical solutions, and advantages of embodiments of the present application clearer, the following clearly describes the technical solutions in embodiments of the present application with reference to the accompanying drawings in the embodiments of the present application. Clearly, the described embodiments are some but not all of the embodiments of the present application. All other embodiments obtained by a person of ordinary skill in the art based on the embodiments of the present application without making creative efforts shall fall within the protection scope of the present application.

Unless otherwise defined, all technical and scientific terms used in the present application have the same meaning as commonly understood by a person skilled in the art of the present application. In the present application, the terms used in the specification of the present application are used only for the purpose of describing specific embodiments and are not intended to limit the present application, and the terms "comprise", "have", and any variations thereof in the specification and claims of the present application and the foregoing description of the drawings are intended to cover a non-exclusive inclusion. The terms "first", "second", and the like in the specification and claims of the present application or in the accompanying drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments.

The term "and/or" in this application is only an associative relationship for describing associated objects, indicating that three relationships may be present. For example, A and/or B may indicate three cases: presence of only A; presence of both A and B; and presence of only B. In addition, the symbol "/" in the present application generally represents an "or" relationship between associated objects.

In the embodiments of the present application, the same reference numerals denote the same component, and a detailed description of the same component is omitted in different embodiments for sake of brevity. It should be understood that the size of various components, such as the thickness, length, and width, and the size of the integrated device, such as the overall thickness, length, and width, in the embodiments of the present application shown in the figures are merely illustrative and should not be construed as limiting the present application.

The term "a plurality" as used herein refers to more than two (including two).

In the embodiments of the present application, the battery cell may be a secondary battery, and the secondary battery refers to a battery cell that may be continuously used by activating an active material by charging the battery cell after discharging thereof.

The battery cell includes, but is not limited to, a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead-acid battery, or the like.

The battery cell generally includes an electrode assembly. The electrode assembly includes a positive electrode, a negative electrode, and a spacer. During charge and discharge of the battery cell, intercalation/de-intercalation of active ions (e.g., lithium ions) are enabled at the positive electrode and negative electrode by moving the active ions between the positive electrode and negative electrode. The spacer is disposed between the positive electrode and the negative electrode, which can reduce the risk of a short circuit between the positive and negative electrodes, and at the same time, can allow active ions to pass through.

In some embodiments, the positive electrode and negative electrode may be a positive plate which may include a positive current collector and a positive active material disposed on at least one surface of the positive current collector.

As an example, the positive current collector has two surfaces opposite in its own thickness direction, and the positive active material is provided on either one or both of the two opposite surfaces of the positive current collector.

As an example, for the positive current collector, a metal foil or a composite current collector may be employed. For example, as the metal foil, aluminum or stainless steel which is subjected to surface treatment by silver, stainless steel, copper, aluminum, nickel, a carbon electrode, carbon, nickel, titanium, or the like can be used. The composite current collector may include a high-molecular material base layer and a metal layer. The composite current collector may be formed by forming a metal material (aluminum, an aluminum alloy, nickel, a nickel alloy, titanium, a titanium alloy, silver, a silver alloy, or the like) on a substrate of a high-molecular material (a substrate of polypropylene, polyethylene terephthalate, polybutylene terephthalate, polystyrene, polyethylene, or the like).

As an example, the positive active material may include at least one of a lithium-containing phosphate, a lithium-transition metal oxide, and respective modified compounds thereof. However, the present application is not limited to these materials, and other conventional materials that can be used as a positive electrode active material of a battery may also be used. These positive electrode active materials may be used alone or in combination of two or more thereof. Here, examples of the lithium-containing phosphate may include, but are not limited to, at least one of lithium iron phosphate (e.g., LiFePO₄, also referred to as LFP), a composite material of lithium iron phosphate and carbon, lithium manganese phosphate (e.g., LiMnPO₄), a composite material of lithium manganese phosphate and carbon, lithium ferro-manganese phosphate, and a composite material of lithium ferro-manganese phosphate and carbon. Examples of the lithium-transition metal oxide may include, but are not limited to, at least one of lithium cobalt oxide (e.g., LiCoO₂), lithium nickel oxide (e.g., LiNiO₂), lithium manganese oxide (e.g., LiMnO₂, and LiMn2O₄), lithium nickel cobalt oxide, lithium manganese cobalt oxide, lithium nickel manganese oxide, lithium nickel cobalt manganese oxide (e.g., LiNi_{1/3}, Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁), lithium nickel cobalt aluminum oxide (e.g., LiNi_{0.85}Co_{0.15}Al_{0.05}O₂), a modified compound thereof and the like.

In some embodiments, a foamed metal may be used for the positive electrode. The foamed metal may be foamed nickel, foamed copper, foamed aluminum, foamed alloy, foamed carbon, or the like. When the foamed metal is used as the positive electrode, its surface the foamed metal may not be provided with the positive active material, and of course, the positive active material may be provided. As an example, within the foamed metal, a lithium source material, which is a lithium metal and/or a lithium-rich material, a potassium metal or a sodium metal may also be filled or/and deposited.

In some embodiments, the negative electrode may be a negative plate that may include a negative current collector.

As an example, for the negative current collector, a metal foil, a foamed metal, or a composite current collector may be employed. For example, as the metal foil, aluminum or stainless steel which is subjected to surface treatment by silver, stainless steel, copper, aluminum, nickel, carbon electrode, carbon, nickel, titanium, or the like can be employed. The foamed metal may be foamed nickel, foamed copper, foamed aluminum, foamed alloy, foamed carbon, or the like. The composite current collector may include a high-molecular material base layer and a metal layer. The composite current collector may be formed by forming a metal material (copper, a copper alloy, nickel, a nickel alloy, titanium, a titanium alloy, silver, a silver alloy, or the like) on a substrate of a high-molecular material (a substrate of polypropylene, polyethylene terephthalate, polybutylene terephthalate, polystyrene, polyethylene, or the like).

As an example, the negative plate may include a negative current collector and a negative active material provided on at least one surface of the negative current collector.

As an example, the negative current collector has two surfaces opposite in its own thickness direction, and the negative active material is provided on either one or both of the two opposite surfaces of the negative current collector.

As an example, for the negative active material, a negative active material which is known in the art for a battery cell may be used. As an example, the negative electrode active material may include at least one of the following materials: synthetic graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and another conventional material that can be used as a negative electrode active material of a battery may also be used. These negative electrode active materials may be used alone or in combination of two or more thereof.

In some embodiments, the material of the positive current collector may be aluminum and the material of the negative current collector may be copper.

In some implementations, the spacer is a separator. Any known porous structure separator with good chemical stability and mechanical stability may be used for the separator.

As an example, a material of the separation film may be selected from at least one of a glass fiber, a nonwoven fabric, polyethylene, polypropylene, and polyvinylidene fluoride. The separator may be a single-layer film or a multilayer composite film. When the separator is a multilayer composite film, the materials of respective layers may be the same or different. The spacer may be a single component located between the positive electrode and negative electrode, or may be attached to the surfaces of the positive electrode and negative electrode.

In some implementations, the spacer is a solid electrolyte. The solid electrolyte is disposed between the positive electrode and the negative electrode, and serves to transfer ions and separate the positive electrode and negative electrode.

In some implementations, the battery cell further comprises an electrolyte that functions to conduct ions between the positive electrode and negative electrode. The electrolyte may be liquid, gel, or solid. Here, a liquid electrolyte comprises an electrolyte salt and a solvent.

In some implementations, the electrolyte salt may be selected from at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from ether solvents. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1, 3-dioxolane, tetrahydrofuran, methyltetrahydrofuran, diphenyl ether, and a crown ether.

Here, a gel electrolyte comprises a backbone network using a polymer as an electrolyte, in combination with an ionic liquid - lithium salt.

Here, a solid electrolyte includes a polymer solid electrolyte, an inorganic solid electrolyte, and a composite solid electrolyte.

As an example, the polymer solid electrolyte may be polyether (polyethylene oxide), polysiloxane, polycarbonate, polyacrylonitrile, polyvinylidene fluoride, polymethyl methacrylate, a single-ion polymer, a poly-ionic liquid-lithium salt, cellulose, or the like.

As an example, the inorganic solid electrolyte may be one or more of an oxide solid electrolyte (crystalline perovskites, sodium superconducting ion conductors, and garnets, amorphous LiPON thin films), a sulfide solid electrolyte (crystalline lithium-superion conductors (lithium germanium phosphorus sulfide, and argyrodite), and amorphous sulfides), and a halide solid electrolyte, a nitride solid electrolyte, and a hydride solid electrolyte.

As an example, the composite solid electrolyte is formed by adding an inorganic solid electrolyte filler in a polymer solid electrolyte.

**In** some implementations, the electrode assembly is a wound structure. The positive electrode plate and the negative electrode plate are wound in a winding structure.

In some implementations, the electrode assembly is a laminated structure.

As an example, a plurality of positive plates and a plurality of negative plates may be provided, and are alternately laminated.

As an example, a plurality of positive plates may be provided, the negative plate may be folded to form a plurality of laminated folding sections, and one positive plate is sandwiched between adjacent folding sections.

As an example, the positive plate and negative plate are both folded to form a plurality of laminated folding sections.

As an example, a plurality of spacers may be provided, between any adjacent positive plates or negative plates respectively.

As an example, the spacer may be continuously provided between any adjacent positive plates or negative plates by folding or winding.

In some embodiments, the electrode assembly may have a cylindrical shape, a flat shape, a polygonal column shape, or the like.

In some implementations, the electrode assembly is provided with a tab that may conduct current from the electrode assembly. The tab includes a positive tab and a negative tab.

In some implementations, the battery cell may include a casing. The casing is used to enclose components such as the electrode assembly and the electrolyte. The casing may be a steel casing, an aluminum casing, a plastic casing (e.g., polypropylene), a composite metal casing (e.g., a copper-aluminum composite casing), an aluminum plastic film, or the like.

As an example, the battery cell can be a cylindrical battery cell, a prismatic battery cell, a pouch battery cell, or a battery cell of other shapes. The prismatic battery cell includes a square-casing battery cell, a blade-shaped battery cell, and a polygon prism battery cell, for example, a hexagonal prism battery cell and the like.

A battery mentioned in the embodiments of the present application refers to a single physical module including one or a plurality of battery cells to provide a higher voltage and capacity.

**In** some embodiments, the battery may be a battery module, and when there are a plurality of battery cells, the plurality of battery cells are arranged and fixed to form a battery module.

In some embodiments, the battery may be a battery pack including a box and a battery cell, and the battery cell or the battery module is accommodated in the box.

In some embodiments, the box may be a part of a chassis structure of a vehicle. For example, a part of the box may be at least a part of a floor of a vehicle, or a part of the box may be at least a part of a cross beam and a side beam of a vehicle.

In some embodiments, the battery may be an energy storage device. The energy storage device includes an energy storage container, an energy storage cabinet, and the like.

In the development of battery technologies, various design factors, for example, performance parameters such as energy density, cycle life, discharge capacity, and charge/discharge rate are simultaneously taken into consideration. In addition, reliability of the battery cell needs to be taken into consideration.

In battery technology, a pressure relief mechanism may be disposed in the battery cell to improve the reliability of the battery cell. The pressure relief mechanism on the battery is vital to its reliability. For example, when a phenomenon such as a short circuit, overcharge, etc. occurs, it is possible to cause thermal runaway in a battery cell, thereby increasing pressure or temperature rapidly. In this case, the internal pressure and temperature can be released outward through the pressure relief mechanism to reduce the probability of the battery cell exploding or catching fire.

In a general battery cell, the battery cell includes a casing and an electrode assembly. The electrode assembly is accommodated inside the casing, and the electrode assembly includes a main body portion and tabs. Along a preset direction, tabs are disposed at one end or two ends of the main body portion. The casing is only provided with one pressure relief mechanism, and the pressure relief mechanism is located at one end of the casing along the preset direction. When the battery cell goes into thermal runaway, the discharge medium inside the casing is discharged through this pressure relief mechanism to achieve the purpose of releasing the internal pressure of the battery cell. In such a battery cell, since the casing is only provided with one pressure relief mechanism, the pressure relief capacity of the casing is insufficient, and the situation of untimely pressure relief is likely to occur, resulting in poor reliability of the battery cell.

In view of this, embodiments of the present application provide a battery cell. A first pressure relief mechanism and a second pressure relief mechanism are disposed on the casing. The first pressure relief mechanism and the second pressure relief mechanism are disposed at an interval, and the first pressure relief mechanism is started earlier than the second pressure relief mechanism. In this way, the pressure relief capacity of the casing is enhanced. When the battery cell goes into thermal runaway, the first pressure relief mechanism may be firstly started, and a discharge medium inside the casing near the first pressure relief mechanism may be discharged through the first pressure relief mechanism. As pressure inside the casing is continuously increased and/or the firstly started pressure relief mechanism is blocked by the discharge medium, the second pressure relief mechanism may be started, and the discharge medium inside the casing may continue to be discharged through the second pressure relief mechanism, reducing the risk of aggravated thermal runaway reaction caused by heat and air pressure accumulation inside the casing, and improving the reliability of the battery cell.

The battery cell described in the embodiments of the present application is applicable to a battery and an electric device using the battery cell.

The electric device may be a vehicle, a cell phone, a portable device, a notebook computer, a ship, a spacecraft, an electric toy, an electric tool, etc. The vehicle may be a fuel vehicle, a gas vehicle, or a new energy vehicle which may be a pure electric vehicle, a hybrid vehicle, a range-extended electric vehicle, or the like; the spacecraft includes an airplane, a rocket, a space plane, a spaceship, or the like; the electric toy includes a stationary or mobile electric toy, such as a game machine, an electric car toy, an electric ship toy, an electric airplane toy, or the like; and the electric tool includes a metal cutting electric tool, a grinding electric tool, an assembly electric tool, and an electric tool for railways, such as, an electric drill, an electric sander, an electric wrench, an electric screwdriver, an electric hammer, an impact drill, a concrete vibrator, an electric planer, or the like. In the embodiments of the present, the above described electric device is not particularly limited.

To facilitate description, in the following embodiments, a vehicle is used as an example of the electric device.

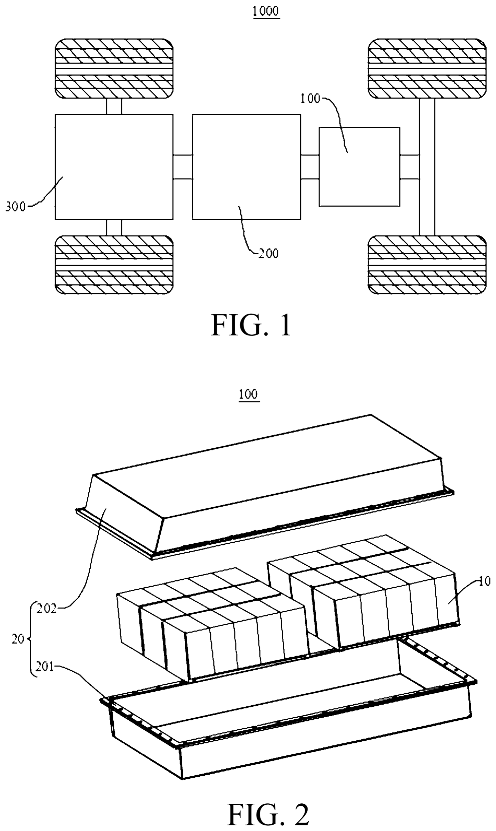

Referring to FIG. 1, FIG. 1 is a schematic diagram of a structure of a vehicle 1000 according to some embodiments of the present application. Inside the vehicle 1000, a battery 100 is provided, which may be provided at the bottom, head, or tail of the vehicle 1000. The battery 100 may be used to power the vehicle 1000, for example, the battery 100 may be used as an operating power source of the vehicle 1000.

The vehicle 1000 may further include a controller 200 and a motor 300, and the controller 200 is used to control the battery 100 to power the motor 300, for example, for a working power requirement for the vehicle 1000 during starting, navigating, and driving the vehicle 1000.

In some embodiments of the present application, the battery 100 may be used not only as an operating power source for the vehicle 1000, but also as a driving power source for the vehicle 1000, instead of or partially instead of fuel or natural gas to provide driving power for the vehicle 1000.

Referring to FIG. 2, FIG. 2 is an exploded view of a battery 100 provided by some embodiments of the present application. The battery 100 includes a battery cell 10 and a box body 20, and the battery cell 10 is accommodated within the box body 20.

Here, the box 20, as a component that accommodates the battery cell 10, provides an accommodation space for the battery cell 10, and the box 20 may have various structures. In some embodiments, the box 20 may include a first portion 201 and a second portion 202, and the first portion 201 and the second portion 202 fit to each other to define an accommodation space for accommodating the battery cell 10. The first portion 201 and the second portion 202 may be in various shapes. For example, they may be in the shape of a rectangular prism, a cylinder, and the like. The first portion 201 may have a hollow structure with one open side, the second portion 202 may also have a hollow structure with one open side, and the open side of the second portion 202 fits to the open side of the first portion 201 to form the box 20 having an accommodation space. Also, the first portion 201 may have a hollow structure with one open side, the second portion 202 may have a plate-like structure, and the second portion 202 may fit to the open side of the first portion 201 to form the box 20 having an accommodation space. The first portion 201 and the second portion 202 may be sealed by a sealing element which may be a seal ring, a sealant, etc.

In the battery 100, one or more battery cells 10 may be provided. If a plurality of battery cells 10 are provided, the plurality of battery cells 10 may be subjected to series connection, parallel connection, or series-parallel connection, and the series-parallel connection means that the plurality of battery cells 10 are subjected to both series connection, and parallel connection. The plurality of battery cells 10 are subjected to series connection, or parallel connection, or series-parallel connection to form a battery module, and a plurality of battery modules are integrated by series connection, parallel connection, or series-parallel connection, and accommodated in the box 20. Also, all of the battery cells 10 are integrated by series connection, parallel connection, or series-parallel connection, and then all of the battery cells 10 are accommodated in the box 20.

In some embodiments, the battery 100 may further include a busbar component. The plurality of battery cells 10 may be electrically connected through the busbar component to achieve series connection, parallel connection or series-parallel connection of the plurality of battery cells 10. The busbar component may be a metal conductor, such as copper, iron, aluminum, stainless steel, aluminum alloy, or the like.

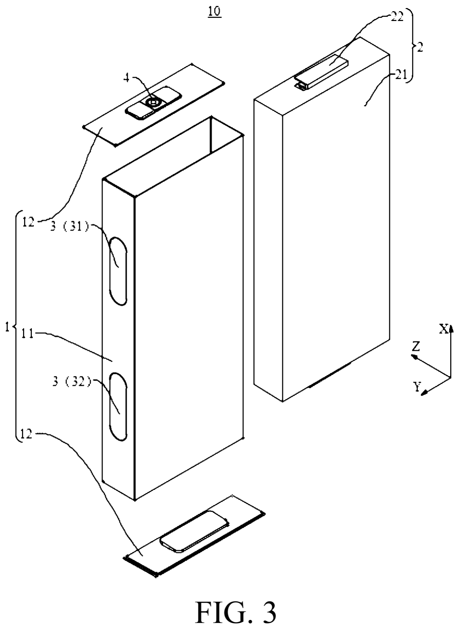

Referring to FIG. 3, FIG. 3 is an exploded view of a battery cell 10 provided by some embodiments of the present application. The battery cell 10 may include a casing 1, an electrode assembly 2 and a pressure relief mechanism 3.

The casing 1 is used to accommodate components such as the electrode assembly 2 and an electrolyte. As an example, the casing 1 may include a shell 11 and an end cap 12.

The shell 11 may have a hollow structure with an opening formed at one end, or the shell 11 may also have a hollow structure with openings formed at two opposite ends. The shell 11 may be in various shapes, such as cylindrical, prismatic, and the like. The shell 11 may be made of various materials, for example, copper, iron, aluminum, steel, an aluminum alloy, plastic, etc.

The end cap 12 is a component that closes the opening of the shell 11 to insulate the internal environment of the battery cell 10 from the external environment. The end cap 12 and the shell 11 define a receiving space for accommodating the electrode assembly 2, electrolyte, and other components. The end cap 12 and the shell 11 may be connected by means of crimping, welding, or the like. The end cap 12 may have a shape adapted to the shape of the casing 1. For example, the end cap 12 has a rectangular plate-like structure adapted to the casing 1 when the shell 11 has a rectangular parallelepiped structure, and for another example, the end cap 12 has a circular plate-like structure adapted to the shell 11 when the shell 11 has a cylinder structure. The materials for the end cap 12 may also be various, such as, copper, iron, aluminum, steel, an aluminum alloy, plastic, or the like, and the materials for the end cap 12 may be the same as or different from that for the shell 11.

In an embodiment where the shell 11 is open at one end, one end cap 12 may be provided correspondingly. In an embodiment where the shell 11 is opened at both opposite ends, two end covers 12 may be provided correspondingly, the two end covers 12 close two openings of the shell 11, and the two end covers 12 and the shell 11 define a receiving space.

The pressure relief mechanism 3 is a component for releasing the internal pressure of the battery cell 10. When the internal pressure of the battery cell 10 reaches a threshold value, the discharge medium inside the battery cell 10 may be discharged through the pressure relief mechanism 3 to achieve the purpose of pressure relief. The discharge medium includes, but is not limited to, an electrolyte solution, dissolved or disintegrated positive and negative electrode plates, fragments of the spacer, gases generated by reactions, flames, and the like. The pressure relief mechanism 3 may be disposed on the shell 11 or may be disposed on the end cap 12. At least two pressure relief mechanisms 3 may be disposed in the battery cell 10. It can be understood that in the battery cell 10, the number of the pressure relief mechanisms 3 may be two, three, four, five or more.

In some embodiments, the battery cell 10 may further include an electrode terminal 4. The electrode terminal 4 is disposed on the casing 1 and is configured for electrically connecting with the tab 22 of the electrode assembly 2 to input or output the electrical energy of the battery cell 10. The electrode terminal 4 may be disposed on the shell 11 of the casing 1 or may be disposed on the end cap 12 of the casing 1. The electrode terminal 4 and the tab 22 may be directly connected. For example, the electrode terminal 4 and the tab 22 are directly welded. The electrode terminal 4 and the tab 22 may also be indirectly connected. For example, the electrode terminal 4 and the tab 22 are indirectly connected through a current collecting member 5.

As an example, as shown in FIG. 3, the shell 11 has a hollow structure with openings formed at two opposite ends. End caps 12 are disposed at two ends of the shell 11, and electrode terminals 4 are disposed on the end caps 12 at two ends of the shell 11. Tabs 22 are formed at two opposite ends of the electrode assembly 2. The tab 22 at one end of the electrode assembly 2 is a positive tab, and the tab 22 at the other end of the electrode assembly 2 is a negative tab. The electrode terminal 4 on one end cap 12 is electrically connected to the positive tab, and the electrode terminal 4 on the other end cap 12 is electrically connected to the negative tab.

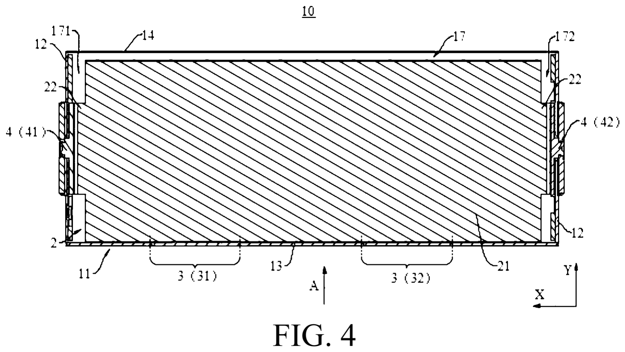

Referring to FIG. 4, FIG. 4 is a cross-sectional view of the battery cell 10 shown in FIG. 3. Embodiments of the present application provide a battery cell 10, including a casing 1, a first pressure relief mechanism 31 and a second pressure relief mechanism 32. The casing 1 is configured to accommodate the electrode assembly 2. The first pressure relief mechanism 31 and the second pressure relief mechanism 32 are disposed on the casing 1 at an interval, and the first pressure relief mechanism 31 is started earlier than the second pressure relief mechanism 32.

The casing 1 may be cylindrical, prismatic, etc. The prismatic shape may be a triangular prism, a quadrangular prism, a pentagonal prism, a hexagonal prism, etc. The quadrangular prism may include a rectangular prism. The first pressure relief mechanism 31 and the second pressure relief mechanism 32 are two pressure relief mechanisms 3 in the battery cell 10. When the battery cell 10 goes into thermal runaway, the first pressure relief mechanism 31 releases pressure and is started earlier than the second pressure relief mechanism 32. The first pressure relief mechanism 31 may be closer to the thermal runaway region of the electrode assembly 2 than the second pressure relief mechanism 32. It may be that the second pressure relief mechanism 32 is started after the first pressure relief mechanism 31 has been started for a preset time. For example, after the first pressure relief mechanism 31 is started, the pressure inside the casing 1 is continuously increased, and after the pressure near the second pressure relief mechanism 32 reaches the starting pressure of the second pressure relief mechanism 32, the second pressure relief mechanism 32 is started. As an example, the preset time is 1 min-8 min, such as 1 min, 2 min, 3 min, 4 min, 5 min, 6 min, 7 min, 8 min, or the like. It may also be that the second pressure relief mechanism 32 is not started after the first pressure relief mechanism 31 is started. For example, after the first pressure relief mechanism 31 is started, as the discharge inside the casing 1 is discharged, the thermal runaway reaction of the electrode assembly 2 does not continue to spread, and the pressure near the second pressure relief mechanism 32 never reaches the starting pressure of the second pressure relief mechanism 32, so the second pressure relief mechanism 32 is not started.

The first pressure relief mechanism 31 and the corresponding wall portion of the casing 1 may be integrally formed, or the first pressure relief mechanism 31 and the corresponding wall portion of the casing 1 may be separately disposed, and the first pressure relief mechanism 31 is mounted on the wall portion. The second pressure relief mechanism 32 and the corresponding wall portion of the casing 1 may be integrally formed, or the second pressure relief mechanism 32 and the corresponding wall portion of the casing 1 may be separately disposed, and the second pressure relief mechanism 32 is mounted on the wall portion.

The first pressure relief mechanism 31 and the second pressure relief mechanism 32 are disposed on the casing 1 at an interval, that is, the first pressure relief mechanism 31 and the second pressure relief mechanism 32 are independently disposed, there is a distance between the two, and they are not in contact or directly connected. Both the first pressure relief mechanism 31 and the second pressure relief mechanism 32 may be configured to release the internal pressure of the battery cell 10. The starting pressure of the first pressure relief mechanism 31 and the starting pressure of the second pressure relief mechanism 32 may be unequal. For example, the starting pressure of the first pressure relief mechanism 31 is less than the starting pressure of the second pressure relief mechanism 32, so that the first pressure relief mechanism 31 is started earlier than the second pressure relief mechanism 32. The starting pressure of the first pressure relief mechanism 31 and the starting pressure of the second pressure relief mechanism 32 may also be equal. In this case, when the battery cell 10 goes into thermal runaway, the pressure inside the casing 1 near the first pressure relief mechanism 31 may be higher than the pressure near the second pressure relief mechanism 32, so that the first pressure relief mechanism 31 is started earlier than the second pressure relief mechanism 32. The starting pressure of the first pressure relief mechanism 31 may also be called the initiation pressure of the first pressure relief mechanism 31. The pressure inside the casing 1 near the first pressure relief mechanism 31 at the moment when the first pressure relief mechanism 31 just is started is the starting pressure of the first pressure relief mechanism 31. The starting pressure of the second pressure relief mechanism 32 may also be called the initiation pressure of the second pressure relief mechanism 32, which is the pressure inside the casing 1 near the second pressure relief mechanism 32 at the moment when the second pressure relief mechanism 32 just is started.

When determining the opening conditions of the first pressure relief mechanism 31 and the second pressure relief mechanism 32 in the battery cell 10, the battery cell 10 may be fully charged at 1C at room temperature (25°C ± 2°C) and then left to stand for 1 hour. Then, a nail penetration test is performed according to GB/T31485-2015 to make the battery cell 10 enter a thermal runaway state. A camera is utilized to record the opening sequence of the first pressure relief mechanism 31 and the second pressure relief mechanism 32.

In this embodiment, the casing 1 is provided with the first pressure relief mechanism 31 and the second pressure relief mechanism 32, and the first pressure relief mechanism 31 is started earlier than the second pressure relief mechanism 32. When the battery cell 10 goes into thermal runaway, the first pressure relief mechanism 31 may be firstly started, and a discharge medium inside the casing 1 near the first pressure relief mechanism 31 may be discharged through the first pressure relief mechanism 31. As the pressure inside the casing 1 is continuously increased and/or the firstly started pressure relief mechanism 31 is blocked by the discharge medium, the second pressure relief mechanism 32 may be started, and the discharge medium inside the casing 1 may continue to be discharged through the second pressure relief mechanism 32, reducing the risk of aggravated thermal runaway reaction caused by heat and air pressure accumulation inside the casing 1, and improving the reliability of the battery cell 10.

In addition, since the first pressure relief mechanism 31 is started earlier than the second pressure relief mechanism 32, after the first pressure relief mechanism 31 is started and before the second pressure relief mechanism 32 is started, the discharge inside the casing 1 near the first pressure relief mechanism 31 can only be discharged through the first pressure relief mechanism 31. This can reduce the risk of thermal runaway being aggravated due to the discharge near the first pressure relief mechanism 31 diffusing to other regions.

In some embodiments, a starting pressure of the first pressure relief mechanism 31 is P₁, a starting pressure of the second pressure relief mechanism 32 is P₂, and P₂-P₁ ≥ 0.02 MPa.

In this embodiment, P₂-P₁ may be any one point value or a range value between any two of 0.02 Mpa, 0.05 Mpa, 0.08 Mpa, 0.1 Mpa, 0.2 Mpa, 0.3 Mpa, 0.4 Mpa, 0.5 Mpa, 0.6 Mpa, 0.7 Mpa, 0.8 Mpa, 0.9 Mpa, 1 Mpa, and the like.

The method for measuring the starting pressures of the first pressure relief mechanism 31 and the second pressure relief mechanism 32 is as follows: a first air pipe is connected externally to the casing 1 near the first pressure relief mechanism 31, and the maximum distance between the connection position of the first air pipe and the casing 1 and the first pressure relief mechanism 31 should not exceed 15 mm; a second air pipe is connected externally to the casing 1 near the second pressure relief mechanism 32, the maximum distance between the connection position of the second air pipe and the casing 1 and the second pressure relief mechanism 32 should not exceed 15 mm, the first air pipe and the second air pipe are connected to a first air pressure sensor and a second air pressure sensor respectively; and the battery cell 10 may be fully charged at 1C at room temperature (25°C ± 2°C) and then left to stand for 1 hour, then a nail penetration test is performed according to GB/T31485-2015 to make the battery cell 10 enter a thermal runaway state, the pressure when the first pressure relief mechanism 31 just is started is obtained through the first air pressure sensor to get the starting pressure of the first pressure relief mechanism 31, and the air pressure when the second pressure relief mechanism 32 just is started is obtained through the second air pressure sensor to get the starting pressure of the second pressure relief mechanism 32.

In this embodiment, having a certain difference between the starting pressure of the second pressure relief mechanism 32 and the starting pressure of the first pressure relief mechanism 31 is beneficial for realizing that the first pressure relief mechanism 31 is started earlier than the second pressure relief mechanism 32.

In some embodiments, 0.05 Mpa ≤ P₂-P₁ ≤ 0.5 Mpa.

In the present embodiment, P₂-P₁ may be any one point value or a range value between any two of 0.05 Mpa, 0.08 Mpa, 0.12 Mpa, 0.15 Mpa, 0.18 Mpa, 0.2 Mpa, 0.22 Mpa, 0.25 Mpa, 0.28 Mpa, 0.3 Mpa, 0.32 Mpa, 0.35 Mpa, 0.38 Mpa, 0.4 Mpa, 0.42 Mpa, 0.45 Mpa, 0.48 Mpa, 0.5 Mpa, and the like.

In this embodiment, when P₂-P₁ ≥ 0.05 Mpa, the difference between the starting pressure of the second pressure relief mechanism 32 and the starting pressure of the first pressure relief mechanism 31 is further increased, delaying the opening of the second pressure relief mechanism 32, and fully utilizing the first pressure relief mechanism 31 for pressure relief. When P₂-P₁ ≤ 0.5 MPa, the pressure difference between the starting pressure of the second pressure relief mechanism 32 and the starting pressure of the first pressure relief mechanism 31 is not too large, reducing the risk of the casing 1 being damaged before the second pressure relief mechanism 32 is started.

In some embodiments, with continued reference to FIG. 4, the casing 1 includes a first wall portion 13, the first wall portion 13 supports the electrode assembly 2 along the gravitational direction, and at least one of the first pressure relief mechanism 31 and the second pressure relief mechanism 32 is disposed on the first wall portion 13.

The first wall portion 13 is a wall portion of the casing 1 that supports the electrode assembly 2 along the gravitational direction, and the first wall portion 13 may bear the gravity of the electrode assembly 2. In the casing 1, the end cap 12 may be the first wall portion 13, or one wall portion of the shell 11 may be the first wall portion 13.

In this embodiment, both the first pressure relief mechanism 31 and the second pressure relief mechanism 32 may be disposed on the first wall portion 13; or the first pressure relief mechanism 31 may be disposed on the first wall portion 13, and the second pressure relief mechanism 32 may not be disposed on the first wall portion 13; or the second pressure relief mechanism 32 may be disposed on the first wall portion 13, and the first pressure relief mechanism 31 may not be disposed on the first wall portion 13.

In this embodiment, since the first wall portion 13 is a wall portion of the casing 1 that supports the electrode assembly 2, and at least one of the first pressure relief mechanism 31 and the second pressure relief mechanism 32 is disposed on the first wall portion 13, the discharge inside the casing 1 may be discharged from the bottom of the casing 1.

Since the first wall portion 13 is pressed by the electrode assembly 2, the region inside the casing 1 near the first wall portion 13 is more likely to be blocked and cause air stagnation, which is not conducive to the discharge of the discharge medium. However, disposing at least one of the first pressure relief mechanism 31 and the second pressure relief mechanism 32 on the first wall portion 13 is more conducive to the discharge of the discharge medium inside the casing 1 near the first wall portion 13, improving the reliability of the battery cell 10.

In some embodiments, with continued reference to FIG. 4, the first pressure relief mechanism 31 is disposed on the first wall portion 13.

In this embodiment, the second pressure relief mechanism 32 may be disposed on the first wall portion 13, or may not be disposed on the first wall portion 13.

In this embodiment, the first pressure relief mechanism 31 is disposed on the first wall portion 13, and the discharge medium inside the casing 1 near the first wall portion 13 may be discharged through the first pressure relief mechanism 31 that is firstly started, achieving timely pressure relief of the battery cell 10.

In some embodiments, with continued reference to FIG. 4, the casing 1 includes a shell 11 and two end caps 12. Openings are formed at two opposite ends of the shell 11, and the two end caps 12 separately close the openings at the two ends of the shell 11. The first wall portion 13 is formed on the shell 11.

It can be understood that the shell 11 has a hollow structure with openings formed at two opposite ends. If only one of the first pressure relief mechanism 31 and the second pressure relief mechanism 32 is disposed on the first wall portion 13, the other may be disposed on other wall portions of the shell 11 or may be disposed on one end cap 12.

The two end caps 12 of the casing 1 are oppositely disposed along the first direction X. In an embodiment where the electrode assembly 2 has a winding structure, the extending direction of the winding center line of the electrode assembly 2 may be parallel to the first direction X.

In this embodiment, the first wall portion 13 is formed on the shell 11, and the shell 11 may provide more space for the pressure relief mechanism 3 disposed on the first wall portion 13, reducing the molding difficulty of the pressure relief mechanism 3.

It should be noted that in other embodiments, in the case where there are two end caps 12 in the casing 1, one of the end caps 12 may also be the first wall portion 13 that plays the role of supporting the electrode assembly 2.

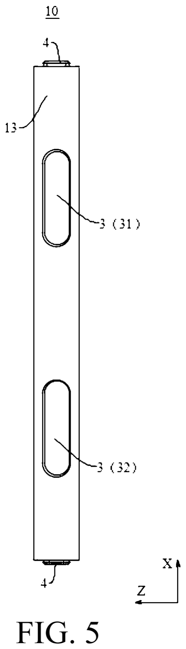

In some embodiments, referring to FIG. 5, FIG. 5 is a view in the direction A of the battery cell 10 shown in FIG. 4. Both the first pressure relief mechanism 31 and the second pressure relief mechanism 32 are disposed on the first wall portion 13.

The first pressure relief mechanism 31 and the first wall portion 13 may be integrally formed, or may be separately disposed and connected, for example, welded. The second pressure relief mechanism 32 and the first wall portion 13 may be integrally formed, or may be separately disposed and connected, for example, welded. In the case where both the first pressure relief mechanism 31 and the second pressure relief mechanism 32 are separately disposed from the first wall portion 13, along the thickness direction of the first wall portion 13, the first pressure relief mechanism 31 and the second pressure relief mechanism 32 may be mounted on the same side of the first wall portion 13, or may be separately mounted on different sides of the first wall portion 13.

As an example, along the first direction X, the first pressure relief mechanism 31 and the second pressure relief mechanism 32 are disposed at an interval.

In this embodiment, both the first pressure relief mechanism 31 and the second pressure relief mechanism 32 are disposed on the first wall portion 13, making the shell 11 have a stronger pressure relief capability, and enabling the discharge medium inside the casing 1 near the first wall portion 13 to be discharged more quickly. When the battery cell 10 goes into thermal runaway, the discharge medium inside the casing 1 may be discharged from the side of the shell 11, reducing the risk of damage to external components located outside the end caps 12 caused by the discharge. The external component may be a busbar component connected to the electrode terminal 4, a temperature detection element, a voltage detection element, or the like.

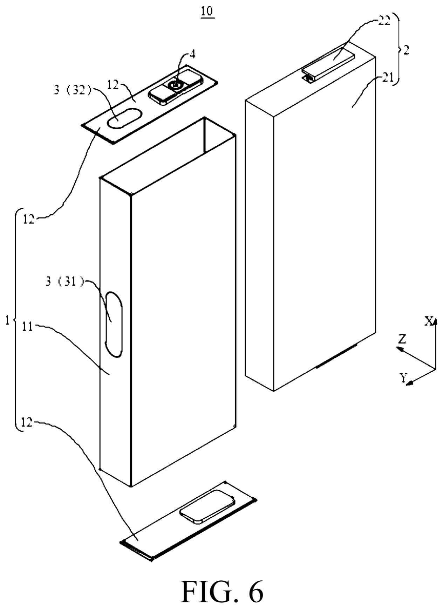

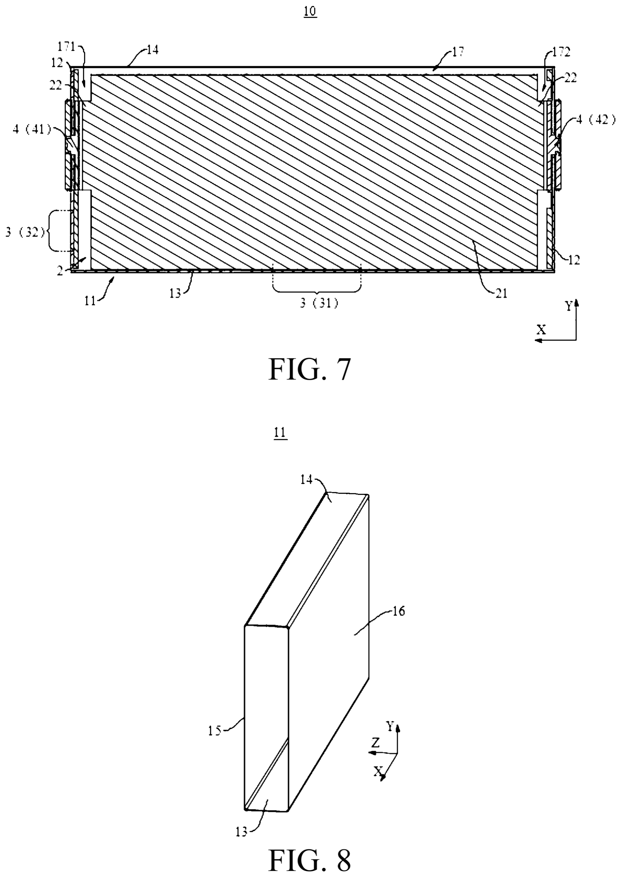

In some embodiments, referring to FIG. 6 and FIG. 7, FIG. 6 is an exploded view of the battery cell 10 provided in some other embodiments of the present application; and FIG. 7 is a cross-sectional view of the battery cell 10 shown in FIG. 6. One of the first pressure relief mechanism 31 and the second pressure relief mechanism 32 is disposed on the first wall portion 13, and the other is disposed on one end cap 12.

It may be that the first pressure relief mechanism 31 is disposed on the first wall portion 13 and the second pressure relief mechanism 32 is disposed on one end cap 12; or it may be that the second pressure relief mechanism 32 is disposed on the first wall portion 13 and the first pressure relief mechanism 31 is disposed on one end cap 12.

As an example, in FIG. 6 and FIG. 7, the first pressure relief mechanism 31 is disposed on the first wall portion 13, and the second pressure relief mechanism 32 is disposed on one end cap 12. Along the first direction X, the first pressure relief mechanism 31 may be centrally disposed on the first wall portion 13, or a midpoint position of the first pressure relief mechanism 31 may deviate from a midpoint position of the first wall portion 13.

**In** this embodiment, both the shell 11 and one end cap 12 have pressure relief capabilities. When the battery cell 10 goes into thermal runaway and both the first pressure relief mechanism 31 and the second pressure relief mechanism 32 are started, the discharge medium inside the battery cell 10 may be discharged from the side and the end of the casing 1.

In some embodiments, referring to FIG. 7 and FIG. 8, FIG. 8 is a schematic structural diagram of the shell 11 shown in FIG. 7. The two end caps 12 are oppositely disposed along the first direction X, the electrode assembly 2 includes a main body portion 21 and a tab 22, and along the first direction X, at least one end of the main body portion 21 is provided with the tab 22. The shell 11 includes a second wall portion 14. The second wall portion 14 is disposed opposite to the first wall portion 13. The first wall portion 13 supports the main body portion 21 along the gravitational direction, and a channel gap 17 is formed between the second wall portion 14 and the main body portion 21. The channel gap 17 is configured to communicate spaces inside the casing 1 at two ends of the main body portion 21 along the first direction X, and the first direction X intersects with the gravitational direction.

Along the first direction X, only one end of the main body portion 21 may be provided with the tab 22, or two ends may be provided with the tab 22.

As an example, in FIG. 7, two ends of the main body portion 21 along the first direction X are provided with tabs 22, the tab 22 at one end is a positive tab, and the tab 22 at the other end is a negative tab. The electrode terminals 4 are disposed on two end caps 12, the electrode terminal 4 on one end cap 12 is electrically connected to the positive tab, and the electrode terminal 4 on the other end cap 12 is electrically connected to the negative tab. The first direction X may be perpendicular to the gravitational direction, or may be disposed at an acute angle or an obtuse angle.

The electrode assembly 2 may include a positive electrode plate, a negative electrode plate and a spacer. The electrode assembly 2 may be a winding structure formed by winding the positive electrode plate, the separator and the negative electrode plate, or may be a laminated structure formed by laminating the positive electrode plate, the spacer and the negative electrode plate. The main body portion 21 may be a portion of the electrode assembly 2 corresponding to a region of the electrode plate coated with the active material layer. The positive electrode tab may be a portion of the positive electrode plate that is not coated with the positive electrode active material layer, and the negative electrode tab may be a portion of the negative electrode plate that is not coated with the negative electrode active material layer.

The first wall portion 13 and the second wall portion 14 are two opposite wall portions of the casing 1. The first wall portion 13 is the wall portion of the casing 1 that supports the main body portion 21 along the gravitational direction. The thicknesses of the first wall portion 13 and the second wall portion 14 may be equal or may be unequal. The first wall portion 13 may be in direct contact with the main body portion 21 to support the main body portion 21, or an intermediate member may be disposed between the first wall portion 13 and the main body portion 21, and the first wall portion 13 supports the main body portion 21 through the intermediate member. The intermediate member may be an insulating member provided between the first wall portion 13 and the main body portion 21.

The channel gap 17 is formed between the second wall portion 14 and the main body portion 21. The spaces inside the casing 1 at the two ends of the main body portion 21 along the first direction X are respectively the first space 171 and the second space 172. The first space 171 is formed between one end of the main body portion 21 and one end cap 12, and the second space 172 is formed between one end of the main body portion 21 and the other end cap 12. The channel gap 17 communicates the first space 171 and the second space 172. When the battery cell 10 goes into thermal runaway, the discharge medium in one of the first space 171 and the second space 172 may flow to the other through the gap.

As an example, as shown in FIG. 8, the shell 11 may further include a third wall portion 15 and a fourth wall portion 16. The first wall portion 13 and the second wall portion 14 are oppositely disposed along a second direction Y, the second direction Y is parallel to the gravitational direction, the third wall portion 15 and the fourth wall portion 16 are oppositely disposed along a third direction Z, and the first wall portion 13, the third wall portion 15, the second wall portion 14 and the fourth wall portion 16 are connected end to end in sequence. The first direction X, the second direction Y and the third direction Z are perpendicular to each other in pairs. The distance between the inner surface of the first wall portion 13 and the inner surface of the second wall portion 14 is greater than the distance between the inner surface of the third wall portion 15 and the inner surface of the fourth wall portion 16. In some embodiments, the thickness of the third wall portion 15 and the thickness of the fourth wall portion 16 are both less than the thickness of the first wall portion 13, and the thickness of the second wall portion 14 is equal to the thickness of the first wall portion 13. In other embodiments, the thicknesses of the first wall portion 13, the second wall portion 14, the third wall portion 15 and the fourth wall portion 16 are equal.

In this embodiment, since a channel gap 17 is formed between the second wall portion 14 and the main body portion 21, and the channel gap 17 communicates spaces inside the casing 1 at the two ends of the main body portion 21 along the first direction X, the discharge medium inside the casing 1 at the two ends of the main body portion 21 may flow between each other through the channel gap 17, which is beneficial for the rapid discharge of the discharge medium inside the casing 1. For example, both the first pressure relief mechanism 31 and the second pressure relief mechanism 32 are disposed on the first wall portion 13, or the first pressure relief mechanism 31 is disposed on the end cap 12 and the second pressure relief mechanism 32 is disposed on the first wall portion 13. When the first pressure relief mechanism 31 is started and the second pressure relief mechanism 32 is not started, the discharge medium accumulated near one end of the main body portion 21 close to the first pressure relief mechanism 31 may be discharged through the first pressure relief mechanism 31, and the discharge medium accumulated near the end of the main body portion 21 far away from the first pressure relief mechanism 31 may flow through the channel gap 17 to the end of the main body portion 21 close to the first pressure relief mechanism 31, and finally be discharged through the first pressure relief mechanism 31, enabling the discharge medium inside the battery cell 10 to be discharged quickly, thereby improving the timeliness of pressure relief of the battery cell 10.

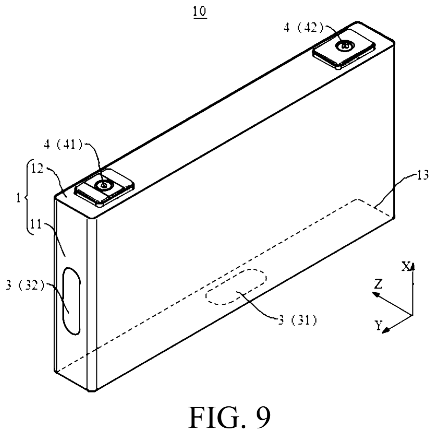

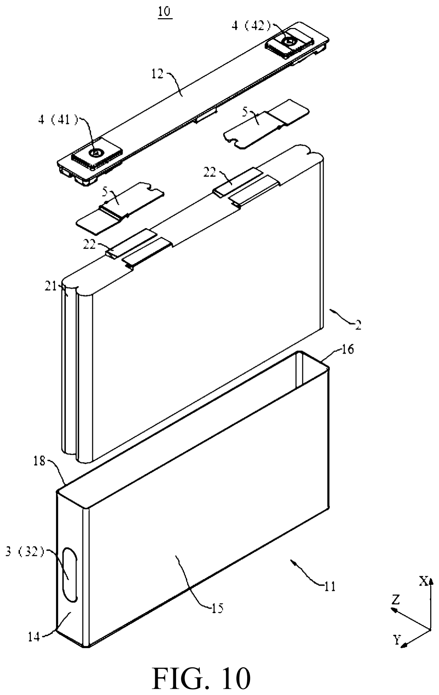

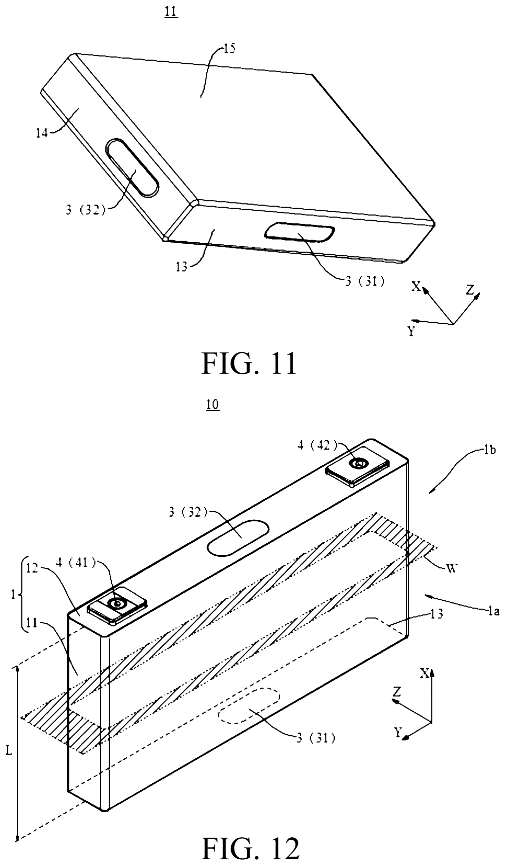

In some embodiments, referring to FIG. 9-FIG. 11, FIG. 9 is an axonometric view of the battery cell 10 (with an opening formed at one end of the shell 11) provided in some embodiments of the present application; FIG. 10 is an exploded view of the battery cell 10 shown in FIG. 9; and FIG. 11 is a schematic structural diagram of the shell 11 shown in FIG. 10. The casing 1 includes a shell 11 and an end cap 12. An opening is formed at one end of the shell 11, and the end cap 12 closes the opening. The end cap 12 is the first wall portion 13; or a wall portion of the shell 11 opposite to the end cap 12 is the first wall portion 13.

An opening is formed at one end of the shell 11 along the first direction X, and along the first direction X, the shell 11 has a wall portion opposite to the end cap 12. In an embodiment where the electrode assembly 2 has a winding structure, the extending direction of the winding center line of the electrode assembly 2 may be parallel to the first direction X.

In an embodiment where the end cap 12 is the first wall portion 13, the end cap 12 supports the electrode assembly 2 along the gravitational direction, and at least one of the first pressure relief mechanism 31 and the second pressure relief mechanism 32 is disposed on the end cap 12. Taking the first pressure relief mechanism 31 disposed on the end cap 12 as an example, the second pressure relief mechanism 32 may be disposed on the end cap 12, and the second pressure relief mechanism 32 may also be disposed on the shell 11.

In an embodiment where the wall portion of the shell 11 opposite to the end cap 12 is the first wall portion 13, the wall portion of the shell 11 opposite to the end cap 12 supports the electrode assembly 2 along the gravitational direction, and at least one of the first pressure relief mechanism 31 and the second pressure relief mechanism 32 is disposed on the wall portion of the shell 11 opposite to the end cap 12. Taking the first pressure relief mechanism 31 disposed on the wall portion of the shell 11 opposite to the end cap 12 as an example, the second pressure relief mechanism 32 may be disposed on the end cap 12, and the second pressure relief mechanism 32 may also be disposed on the wall portion of the shell 11 around the opening.

As an example, the electrode assembly 2 includes a main body portion 21 and tabs 22. Along the first direction X, two tabs 22 are disposed at one end of the main body portion 21, and the two tabs 22 are respectively a positive tab and a negative tab. Two electrode terminals 4 are disposed on the end cap 12. One electrode terminal 4 is electrically connected to the positive tab through one current collecting member 5, and the other electrode terminal 4 is electrically connected to the negative tab through another current collecting member 5.

In the embodiments shown in FIG. 9-FIG. 11, along the first direction X, the wall portion of the shell 11 opposite to the end cap 12 is the first wall portion 13. The shell 11 includes a second wall portion 14. One end of the second wall portion 14 is connected to the first wall portion 13, and the other end of the second wall portion 14 extends to the opening of the shell 11. The first pressure relief mechanism 31 is disposed on the first wall portion 13, and the second pressure relief mechanism 32 is disposed on the second wall portion 14. In other embodiments, it can also be that the second pressure relief mechanism 32 is disposed on the first wall portion 13, and the first pressure relief mechanism 31 is disposed on the second wall portion 14.

As an example, the shell 11 may further include a third wall portion 15, a fourth wall portion 16 and a fifth wall portion 18. The second wall portion 14, the third wall portion 15, the fourth wall portion 16 and the fifth wall portion 18 are connected end to end in sequence. The second wall portion 14, the third wall portion 15, the fourth wall portion 16 and the fifth wall portion 18 are disposed around the first wall portion 13. The second wall portion 14 and the fourth wall portion 16 are oppositely disposed along the second direction Y, the third wall portion 15 and the fifth wall portion 18 are oppositely disposed along the third direction Z, and the first direction X, the second direction Y and the third direction Z are perpendicular to each other in pairs. The distance between the inner surface of the second wall portion 14 and the inner surface of the fourth wall portion 16 is greater than the distance between the inner surface of the third wall portion 15 and the inner surface of the fifth wall portion 18.

If the end cap 12 is the first wall portion 13, the end cap 12 is located at the bottom of the casing 1 and supports the electrode assembly 2. When the battery cell 10 goes into thermal runaway, the discharge medium inside the casing 1 may be discharged through the end cap 12 at the bottom of the casing 1. If the wall portion of the shell 11 opposite to the end cap 12 is the first wall portion 13, this wall portion is located at the bottom of the casing 1 and supports the electrode assembly 2. When the battery cell 10 goes into thermal runaway, the discharge medium inside the casing 1 may be discharged through the bottom at the bottom of the casing 1.

In some embodiments, referring to FIG. 12, FIG. 12 is an axonometric view of the battery cell 10 (with an opening formed at one end of the shell 11) provided in some other embodiments of the present application. One of the first pressure relief mechanism 31 and the second pressure relief mechanism 32 is disposed on the end cap 12, and the other is disposed on the wall portion of the shell 11 opposite to the end cap 12.

It may be that the first pressure relief mechanism 31 is disposed on the end cap 12 and the second pressure relief mechanism 32 is disposed on the wall portion of the shell 11 opposite to the end cap 12; or it may be that the second pressure relief mechanism 32 is disposed on the end cap 12 and the first pressure relief mechanism 31 is disposed on the wall portion of the shell 11 opposite to the end cap 12.

As an example, in FIG. 12, the wall portion of the shell 11 opposite to the end cap 12 is the first wall portion 13, the first pressure relief mechanism 31 is disposed on the first wall portion 13, and the second pressure relief mechanism 32 is disposed on the end cap 12.

In this embodiment, when the battery cell 10 goes into thermal runaway, the discharge medium accumulated at the two ends of the electrode assembly 2 inside the casing 1 may be quickly discharged from the two opposite ends of the casing 1, enhancing the pressure relief capability of the battery cell 10.

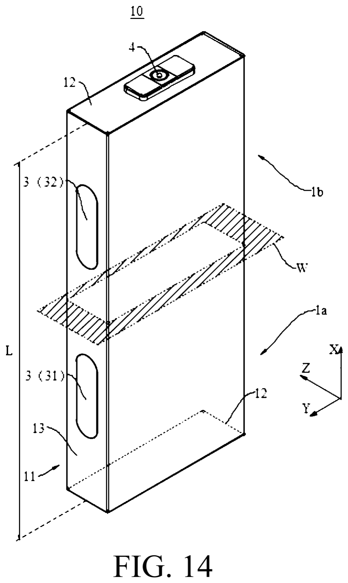

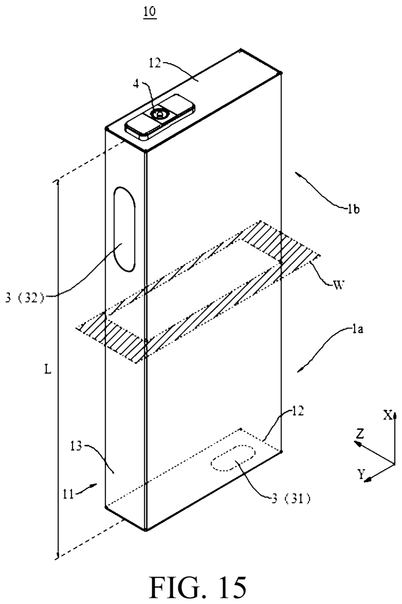

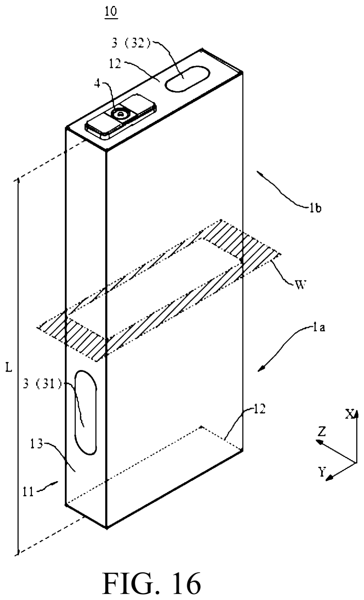

In some embodiments, referring to FIG. 12 to FIG. 16, FIG. 13 is an axonometric view of the battery cell 10 (with openings formed at two opposite ends of the shell 11) provided in some embodiments of the present application; FIG. 14 is an axonometric view of the battery cell 10 (with openings formed at two opposite ends of the shell 11) provided in some other embodiments of the present application; FIG. 15 is an axonometric view of the battery cell 10 (with openings formed at two opposite ends of the shell 11) provided in still some other embodiments of the present application; and FIG. 16 is an axonometric view of the battery cell 10 (with openings formed at two opposite ends of the shell 11) provided in yet some other embodiments of the present application. The casing 1 includes a shell 11 and an end cap 12. Along the first direction X, at least one end of the shell 11 is formed with an opening, the end caps 12 correspond to the openings one-to-one, and the end caps 12 close the openings. The casing 1 has a first half-region 1a and a second half-region 1b, along the first direction X, a portion from a middle cross-section W of the casing 1 to one end of the casing 1 is the first half-region 1a, a portion from the middle cross-section W of the casing 1 to the other end of the casing 1 is the second half-region 1b, and the middle cross-section W is perpendicular to the first direction X. The first pressure relief mechanism 31 is disposed in the first half-region 1a, and the second pressure relief mechanism 32 is disposed in the second half-region 1b.

In this embodiment, the casing 1 may be cylindrical, prismatic, or the like. The shell 11 may have a hollow structure with an opening formed at one end, or may have a hollow structure with openings formed at two opposite ends. Along the first direction X, the middle cross-section W is located at the middle position of the casing 1, and the distances from the middle cross-section W to the two ends of the casing 1 are equal.

In this embodiment, both the first half-region 1a and the second half-region 1b of the shell 11 are provided with the pressure relief mechanism 3. After the first pressure relief mechanism 31 is started, the discharge medium in the first half-region 1a may be discharged through the first pressure relief mechanism 31. After the second pressure relief mechanism 32 is started, the discharge in the second half-region 1b may be discharged through the second pressure relief mechanism 32, improving the timeliness of pressure relief of the battery cell 10.

In some embodiments, along the first direction X, a length of the casing 1 is L, and L ≥ 80 mm.

Along the first direction X, the casing 1 has two opposite end faces, the maximum distance between the two end faces is the length of the casing 1, and the distances from the middle cross-section W to the two end faces are equal. If the two end faces of the casing 1 are flat faces, the length of the casing 1 is measured based on these two end faces; and if one or two of the end faces of the casing 1 are formed with protrusions or recesses, the length of the casing 1 is measured based on a flat face region of the end face. In an embodiment where the shell 11 has a hollow structure with an opening formed at one end, it may be that the surface of the end cap 12 facing the outside of the casing 1 along the first direction X is one end face of the casing 1, and the surface of the wall portion of the shell 11 opposite to the end cap 12 facing the outside of the casing 1 along the first direction X is the other end face of the casing 1. In an embodiment where the shell 11 has a hollow structure with openings formed at two opposite ends, it may be that the surface of one end cap 12 facing the outside of the casing 1 along the first direction X is one end face of the casing 1, and the surface of the other end cap 12 facing the outside of the casing 1 along the first direction X is the other end face of the casing 1.

In this embodiment, L may be a point value of any one of or a range value of any two of 80 mm, 100 mm, 140 mm, 160 mm, 180 mm, 200 mm, 240 mm, 260 mm, 280 mm, 300 mm, 340 mm, 360 mm, 380 mm, 400 mm, 440 mm, 460 mm, 480 mm, 500 mm, 540 mm, 560 mm, 580 mm, and 600 mm.

In this embodiment, L ≥ 80 mm, which is beneficial for meeting the requirement of large capacity of the battery cell 10. In addition, when L ≥ 80 mm, disposing the first pressure relief mechanism 31 and the second pressure relief mechanism 32 in the first half-region 1a and the second half-region 1b separately may alleviate the situation of untimely pressure relief of the battery cell 10.

In some embodiments, L ≥ 160 mm.

In this embodiment, L may be a point value of any one of or a range value of any two of 160 mm, 170 mm, 180 mm, 190 mm, 200 mm, 210 mm, 220 mm, 230 mm, 240 mm, 250 mm, 260 mm, 270 mm, 280 mm, 290 mm, 300 mm, 310 mm, 320 mm, 330 mm, 340 mm, 350 mm, 360 mm, 370 mm, 380 mm, 390 mm, 400 mm, 410 mm, 420 mm, 430 mm, 440 mm, 450 mm, 460 mm, 470 mm, 480 mm, 490 mm, 500 mm, 510 mm, 520 mm, 530 mm, 540 mm, 550 mm, 560 mm, 570 mm, 580 mm, 590 mm, and 600 mm.

For a general battery cell 10, when the length of the casing 1 is greater than or equal to 160 mm, the pressure relief capability of the battery cell 10 is poor, and the situation of untimely pressure relief is likely to occur. However, in embodiments of the present application, the first pressure relief mechanism 31 is disposed in the first half-region 1a of the casing 1, the second pressure relief mechanism 32 is disposed in the second half-region 1b of the casing 1, and the first pressure relief mechanism 31 is started earlier than the second pressure relief mechanism 32. Even when the length of the casing 1 is greater than or equal to 160 mm, the battery cell 10 can still achieve timely pressure relief.

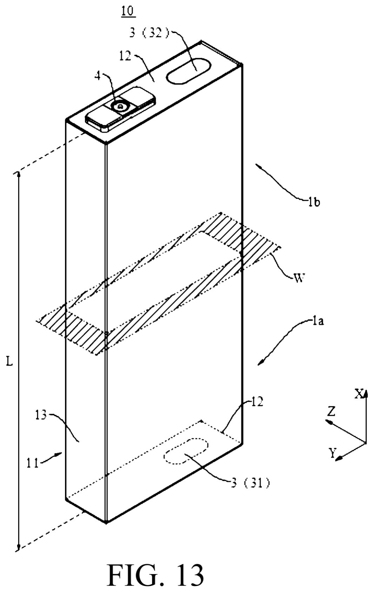

In some embodiments, with continued reference to FIG. 13-FIG. 16. Along the first direction X, openings are formed at two opposite ends of the shell 11, two end caps 12 separately close the openings at the two ends of the shell 11, and the two end caps 12 are separately located in the first half-region 1a and the second half-region 1b. The first pressure relief mechanism 31 and the second pressure relief mechanism 32 are separately disposed on the two end caps 12; or both the first pressure relief mechanism 31 and the second pressure relief mechanism 32 are disposed on the shell 11; or the first pressure relief mechanism 31 is disposed on the end cap 12 located in the first half-region 1a, and the second pressure relief mechanism 32 is disposed on a portion of the shell 11 located in the second half-region 1b; or the first pressure relief mechanism 31 is disposed on a portion of the shell 11 located in the first half-region 1a, and the second pressure relief mechanism 32 is disposed on the end cap 12 located in the second half-region 1b.

It can be understood that one portion of the shell 11 is located in the first half-region 1a, and the other portion of the shell 11 is located in the second half-region 1b.

In the embodiment shown in FIG. 13, the first pressure relief mechanism 31 and the second pressure relief mechanism 32 are separately located on the two end caps 12 to realize that the first pressure relief mechanism 31 and the second pressure relief mechanism 32 are separately located in the first half-region 1a and the second half-region 1b.

In the embodiment shown in FIG. 14, both the first pressure relief mechanism 31 and the second pressure relief mechanism 32 are disposed on the shell 11. The first pressure relief mechanism 31 is disposed on a portion of the shell 11 located in the first half-region 1a, and the second pressure relief mechanism 32 is disposed on a portion of the shell 11 located in the second half-region 1b to realize that the first pressure relief mechanism 31 and the second pressure relief mechanism 32 are separately located in the first half-region 1a and the second half-region 1b. The first pressure relief mechanism 31 and the second pressure relief mechanism 32 may be separately disposed on two wall portions of the shell 11, or may be disposed on the same wall portion of the shell 11. For example, both the first pressure relief mechanism 31 and the second pressure relief mechanism 32 are disposed on the first wall portion 13 of the shell 11 for supporting the electrode assembly 2.

In the embodiment shown in FIG. 15, the first pressure relief mechanism 31 is disposed on the end cap 12 located in the first half-region 1a, and the second pressure relief mechanism 32 is disposed on a portion of the shell 11 located in the second half-region 1b to realize that the first pressure relief mechanism 31 and the second pressure relief mechanism 32 are separately located in the first half-region 1a and the second half-region 1b.

In the embodiment shown in FIG. 16, the first pressure relief mechanism 31 is disposed on a portion of the shell 11 located in the first half-region 1a, and the second pressure relief mechanism 32 is disposed on the end cap 12 located in the second half-region 1b.

If the first pressure relief mechanism 31 and the second pressure relief mechanism 32 are separately disposed on the two end caps 12, the discharge medium accumulated at the two ends of the electrode assembly 2 inside the casing 1 may be quickly discharged from the two opposite ends of the casing 1. If both the first pressure relief mechanism 31 and the second pressure relief mechanism 32 are disposed on the shell 11, the discharge medium inside the casing 1 may be discharged from the side of the casing 1, reducing the risk of damage to external components located outside the end caps 12 caused by the discharge. If one of the first pressure relief mechanism 31 and the second pressure relief mechanism 32 is disposed on the end cap 12 and the other is disposed on the shell 11, the discharge medium inside the casing 1 may be discharged from the side and the end of the casing 1.

In some embodiments, with continued reference to FIG. 13-FIG. 16, the battery cell 10 further includes a first electrode terminal 41 and a second electrode terminal 42 with opposite polarities, both the first electrode terminal 41 and the second electrode terminal 42 are electrically connected to the electrode assembly 2 (not shown in FIG. 13-FIG. 16), and the first electrode terminal 41 and the second electrode terminal 42 are separately disposed on the two end caps 12.

As an example, along the first direction X, two opposite ends of the main body portion 21 of the electrode assembly 2 are both provided with tabs 22. The tab 22 at one end of the main body portion 21 is a positive tab, and the other end is a negative tab. One of the positive tab and the negative tab is electrically connected to the first electrode terminal 41, and the other is electrically connected to the second electrode terminal 42.

The first electrode terminal 41 and the second electrode terminal 42 are separately disposed on the two end caps 12, reducing the risk of interference between the first electrode terminal 41 and the second electrode terminal 42 during the assembly process, and reducing the risk of short-circuiting between the first electrode terminal 41 and the second electrode terminal 42. As shown in FIG. 13, in an embodiment where the first pressure relief mechanism 31 and the second pressure relief mechanism 32 are separately disposed on the two end caps 12, the first pressure relief mechanism 31 may share the space of one end cap 12 with the first electrode terminal 41, and the first pressure relief mechanism 31 does not need to occupy more space outside this end cap 12. The second pressure relief mechanism 32 may share the space of the other end cap 12 with the second electrode terminal 42, and the second pressure relief mechanism 32 does not need to occupy more space outside this end cap 12.

In some embodiments, with continued reference to FIG. 12, along the first direction X, an opening is formed at one end of the shell 11. One of the first pressure relief mechanism 31 and the second pressure relief mechanism 32 is disposed on the end cap 12, and the other is disposed on the shell 11.

It may be that the first pressure relief mechanism 31 is disposed on the end cap 12 and the second pressure relief mechanism 32 is disposed on the shell 11; or it may be that the second pressure relief mechanism 32 is disposed on the end cap 12 and the first pressure relief mechanism 31 is disposed on the shell 11.

As an example, in FIG. 12, the first pressure relief mechanism 31 is disposed on the shell 11 and the second pressure relief mechanism 32 is disposed on the end cap 12.

In this embodiment, both the shell 11 and the end cap 12 have the pressure relief capabilities. When the battery cell 10 goes into thermal runaway, the discharge inside the battery cell 10 may be discharged from different directions.

In some embodiments, with continued reference to FIG. 12, along the first direction X, the shell 11 includes a first wall portion 13 disposed opposite to the end cap 12. One of the end cap 12 and the first wall portion 13 is located in the first half-region 1a, and the other is located in the second half-region 1b. One of the first pressure relief mechanism 31 and the second pressure relief mechanism 32 is disposed on the end cap 12, and the other is disposed on the first wall portion 13.

It may be that the first pressure relief mechanism 31 is disposed on the end cap 12 and the second pressure relief mechanism 32 is disposed on the first wall portion 13; or it may be that the second pressure relief mechanism 32 is disposed on the end cap 12 and the first pressure relief mechanism 31 is disposed on the first wall portion 13.

As an example, in FIG. 12, the first pressure relief mechanism 31 is disposed on the first wall portion 13 and the second pressure relief mechanism 32 is disposed on the end cap 12. The first wall portion 13 is located at the bottom of the shell 11 and supports the main body portion 21 (not shown in FIG. 12) along the gravitational direction.

In this embodiment, both the end cap 12 and the first wall portion 13 are provided with the pressure relief mechanism 3. When the battery cell 10 goes into thermal runaway, the discharge medium accumulated at the two ends of the electrode assembly 2 inside the casing 1 may be quickly discharged from the two opposite ends of the casing 1, enhancing the pressure relief capability of the battery cell 10.

In some embodiments, with continued reference to FIG. 12, the battery cell 10 further includes a first electrode terminal 41 and a second electrode terminal 42 with opposite polarities, both the first electrode terminal 41 and the second electrode terminal 42 are electrically connected to the electrode assembly 2, and both the first electrode terminal 41 and the second electrode terminal 42 are disposed on the end cap 12.

Along the first direction X, one end of the main body portion 21 is provided with two tabs 22 (not shown in FIG. 12), the two tabs 22 are respectively a positive tab and a negative tab, one of the positive tab and the negative tab is electrically connected to the first electrode terminal 41, and the other is electrically connected to the second electrode terminal 42.

In this embodiment, both the first electrode terminal 41 and the second electrode terminal 42 are disposed on the end cap 12, reducing the assembly difficulty of the first electrode terminal 41 and the second electrode terminal 42, and making it easier to electrically connect the first electrode terminal 41 and the second electrode terminal 42 with external components. The external components may be the busbar components for realizing the electrical connection of the plurality of battery cells 10. In addition, the first electrode terminal 41 and the second electrode terminal 42 may share the space of the end cap 12 with the pressure relief mechanism 3 on the end cap 12, and the pressure relief mechanism 3 does not need to occupy more space outside the end cap 12.

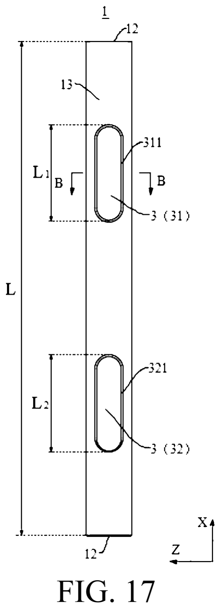

In some embodiments, referring to FIG. 17, FIG. 17 is a schematic structural diagram of the casing 1 provided in some embodiments of the present application. The casing 1 includes a first wall portion 13, both the first pressure relief mechanism 31 and the second pressure relief mechanism 32 are disposed on the first wall portion 13, the first pressure relief mechanism 31 is provided with a first scoring groove 311, and the second pressure relief mechanism 32 is provided with a second scoring groove 321. The first scoring groove 311 and the second scoring groove 321 are disposed at an interval along the first direction X, along the first direction X, a length of the casing 1 is L, a maximum span of the first scoring groove 311 is L₁, and a maximum span of the second scoring groove 321 is L₂, and 0.2 ≤ (L₁+L₂)/L ≤ 0.6.

It can be understood that the first pressure relief mechanism 31 and the second pressure relief mechanism 32 are disposed on the same wall portion of the casing.

Along the first direction X, the casing 1 has two opposite end faces, and the maximum distance between the two end faces is the length of the casing 1. In an embodiment where the shell 11 has a hollow structure with an opening formed at one end, it may be that the surface of the end cap 12 facing the outside of the casing 1 along the first direction X is one end face of the casing 1, and the surface of the wall portion of the shell 11 opposite to the end cap 12 facing the outside of the casing 1 along the first direction X is the other end face of the casing 1. In an embodiment where the shell 11 has a hollow structure with openings formed at two opposite ends, it may be that the surface of one end cap 12 facing the outside of the casing 1 along the first direction X is one end face of the casing 1, and the surface of the other end cap 12 facing the outside of the casing 1 along the first direction X is the other end face of the casing 1. As an example, in FIG. 17, there are two end caps 12 in the casing 1, and the outer surfaces of the two end caps 12 are two opposite end faces of the casing 1 along the first direction X.

The maximum span of the first scoring groove 311 along the first direction X is the distance between the two positions of the first scoring groove 311 that are farthest apart along the first direction X. The maximum span of the second scoring groove 321 along the first direction X is the distance between the two positions of the second scoring groove 321 that are farthest apart along the first direction X. It may be that L₁ = L₂, or may be L₁ > L₂, or may be L₁ < L₂.

The first scoring groove 311 and/or the second scoring groove 321 may be a groove extending along a closed trajectory, and the closed trajectory may be circular, rectangular, etc.; and the first scoring groove 311 and/or the second scoring groove 321 may also be a groove along a non-closed trajectory, and the non-closed trajectory may be linear, arc-shaped, U-shaped, H-shaped, V-shaped, L-shaped, Y-shaped, X-shaped, etc. The first scoring groove 311 may be disposed on an inner side of the first pressure relief mechanism 31 (the side of the first pressure relief mechanism 31 facing the electrode assembly 2 along the thickness direction of the first wall portion 13), and the first scoring groove 311 may also be disposed on an outer side of the first pressure relief mechanism 31 (the side of the first pressure relief mechanism 31 facing away from the electrode assembly 2 along the thickness direction of the first wall portion 13); the second scoring groove 321 may be disposed on an inner side of the second pressure relief mechanism 32 (the side of the second pressure relief mechanism 32 facing the electrode assembly 2 along the thickness direction of the first wall portion 13), and the second scoring groove 321 may also be disposed on an outer side of the second pressure relief mechanism 32 (the side of the second pressure relief mechanism 32 facing away from the electrode assembly 2 along the thickness direction of the first wall portion 13).

In this embodiment, (L₁+L₂)/L may be a point value of any one of or a range value between any two of 0.2, 0.23, 0.25, 0.28, 0.3, 0.33, 0.35, 0.38, 0.4, 0.43, 0.45, 0.48, 0.5, 0.53, 0.55, 0.58, 0.6, and the like.

In this embodiment, (L₁+L₂)/L ≥ 0.2 is beneficial for increasing a total pressure relief area of the first pressure relief mechanism 31 and the second pressure relief mechanism 32 on the first wall portion 13, and is beneficial for improving the pressure relief rate of the battery cell 10. When (L₁+L₂)/L ≤ 0.6, a sum of the maximum spans of the first scoring groove 311 and the second scoring groove 321 along the first direction X is not too large, reducing the sizes of the first pressure relief mechanism 31 and the second pressure relief mechanism 32 along the first direction X, which is beneficial for improving the strength of the first wall portion 13.

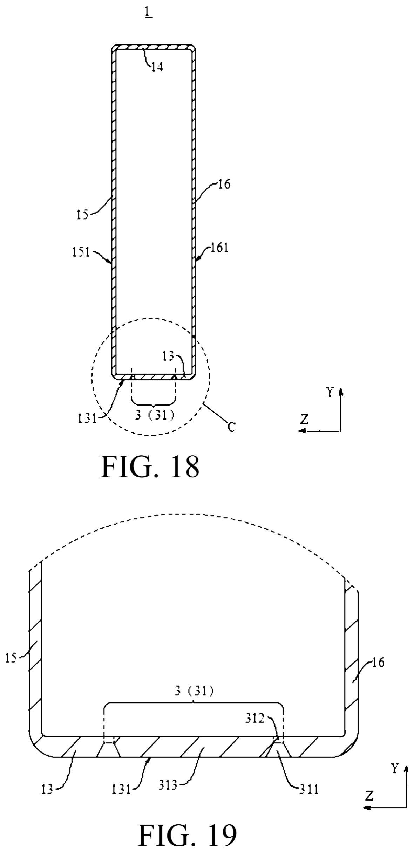

In some embodiments, referring to FIG. 17 and FIG. 18, FIG. 18 is a cross-sectional view taken along the line B-B of the casing 1 shown in FIG. 17. The casing 1 includes a first wall portion 13, both the first pressure relief mechanism 31 and the second pressure relief mechanism 32 are disposed on the first wall portion 13, the first wall portion 13 has a first outer surface 131 facing away from the electrode assembly 2 (not shown in FIG. 17 and FIG. 18), an area of the first outer surface 131 is S, a predetermined pressure relief area of the first pressure relief mechanism 31 is S₁, and a predetermined pressure relief area of the second pressure relief mechanism 32 is S₂, satisfying: 0.05 ≤ (Si+S₂)/S ≤ 0.55.

The predetermined pressure relief area of the first pressure relief mechanism 31 is the maximum area that the first pressure relief mechanism 31 is predetermined to be able to open, and the predetermined pressure relief area of the second pressure relief mechanism 32 is the maximum area that the second pressure relief mechanism 32 is expected to be able to open. It may be that S₁ = S₂, or may be S₁ < S₂, or may be S₁ > S₂.

Taking the first wall portion 13 being a rectangular wall portion as an example, the first outer surface 131 is rectangular, the length and width of the first outer surface 131 are measured, and the area of the first outer surface 131 may be calculated by multiplying the length and width of the first outer surface 131.

The first pressure relief mechanism 31 and the first wall portion 13 may be integrally formed, or may be separately disposed. The second pressure relief mechanism 32 and the first wall portion 13 may be integrally formed, or may be separately disposed. If the first pressure relief mechanism 31 and the first wall portion 13 are separately disposed, a first pressure relief hole may be disposed on the first wall portion 13, and the first pressure relief mechanism 31 is mounted on the first wall portion 13 and covers the first pressure relief hole. If the second pressure relief mechanism 32 and the first wall portion 13 are separately disposed, a second pressure relief hole may be disposed on the first wall portion 13, and the second pressure relief mechanism 32 is mounted on the second wall portion 14 and covers the second pressure relief hole.

As an example, in FIG. 18, the casing 1 includes a first wall portion 13, a second wall portion 14, a third wall portion 15 and a fourth wall portion 16. The first wall portion 13, the third wall portion 15, the second wall portion 14 and the fourth wall portion 16 are connected end to end in sequence to form a shell 11 with openings at two ends. The third wall portion 15 has a second outer surface 151 facing away from the electrode assembly 2, and the fourth wall portion 16 has a third outer surface 161 facing away from the electrode assembly 2. The first outer surface 131 and the second outer surface 151 may be connected by a rounded surface, and the first outer surface 131 and the third outer surface 161 may be connected by another rounded surface.

In this embodiment, (S₁+S₂)/S may be a point value of any one of or a range value between any two of 0.05, 0.1, 0.13, 0.15, 0.18, 0.2, 0.23, 0.25, 0.28, 0.3, 0.33, 0.35, 0.38, 0.4, 0.43, 0.45, 0.48, 0.5, 0.53, 0.55, and the like.

In this embodiment, when (S₁+S₂)/S ≥ 0.05, the total pressure relief area of the first pressure relief mechanism 31 and the second pressure relief mechanism 32 is larger, which is beneficial for improving the pressure relief rate of the battery cell 10 and the timeliness of pressure relief of the battery cell 10; and (S₁+S₂)/S ≤ 0.55 is beneficial for improving the strength of the first wall portion 13.

In some embodiments, 0.15 ≤ (S₁+S₂)/S ≤ 0.35.

In this embodiment, (S₁+S₂)/S may be a point value of any one of or a range value between any two of 0.15, 0.16, 0.17, 0.18, 0.19, 0.2, 0.21, 0.22, 0.23, 0.24, 0.25, 0.26, 0.27, 0.28, 0.29, 0.3, 0.31, 0.32, 0.33, 0.34, 0.35, and the like.

In some embodiments, referring to FIG. 19, FIG. 19 is a partially enlarged view of the area C of the casing 1 shown in FIG. 18. The first pressure relief mechanism 31 includes a first weak region 312 and a first pressure relief region 313. The first pressure relief region 313 is configured to be able to be opened when the first weak region 312 cracks, and an area of the first pressure relief region 313 is S₁.

The first weak region 312 is a weaker region in the first pressure relief mechanism 31. The first weak region 312 may be formed on the first pressure relief mechanism 31 in various ways. For example, annealing treatment is performed on a local region of the first pressure relief mechanism 31 to reduce the strength of the region, so as to correspondingly form the first weak region 312. Another example is to machine a groove on the first pressure relief mechanism 31 to correspondingly form the first weak region 312 in the region of the groove.

The first pressure relief region 313 may be a region defined by the first weak region 312. When the first weak region 312 cracks, the first pressure relief region 313 may be opened in a flipping or detaching manner. The area of the first pressure relief region 313 is the predetermined pressure relief area of the first pressure relief mechanism 31.

In an embodiment where the first pressure relief mechanism 31 and the first wall portion 13 are integrally disposed, the first weak region 312 and the first pressure relief region 313 and the first wall portion 13 may be integrally formed to realize the integral formation of the first pressure relief mechanism 31 and the first wall portion 13. In the embodiment where the first pressure relief mechanism 31 and the first wall portion 13 are separately disposed, the first pressure relief mechanism 31 may be an explosion-proof sheet in a sheet shape, and the explosion-proof sheet partially forms the first weak region 312.

In this embodiment, when the first pressure relief mechanism 31 is started, the first pressure relief region 313 can be opened with the first weak region 312 as the boundary, increasing the pressure relief area of the first pressure relief mechanism 31.

In some embodiments, the first pressure relief mechanism 31 is provided with a first scoring groove 311, and the first pressure relief mechanism 31 forms a first weak region 312 in a region provided with the first scoring groove 311.

In this embodiment, the first scoring groove 311 may be a groove extending along a closed trajectory; and the first scoring groove 311 may also be a groove extending along a non-closed trajectory. The non-closed trajectory may be arc-shaped, U-shaped, H-shaped, V-shaped, L-shaped, Y-shaped, X-shaped, etc. After the first scoring groove 311 is disposed on the first pressure relief mechanism 31, a remaining portion of the first pressure relief mechanism 31 corresponding to the region of the first scoring groove 311 is the first weak region 312.

In this embodiment, the first weak region 312 is formed by disposing the first scoring groove 311 on the first pressure relief mechanism 31, and the forming method of the first weak region 312 is simple, reducing the forming difficulty of the first weak region 312.

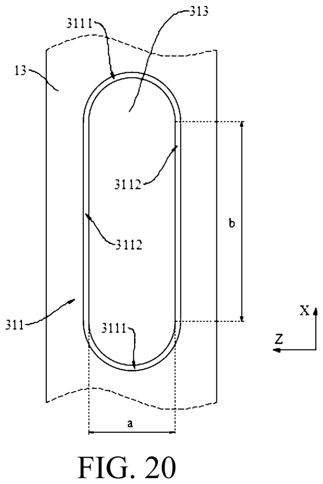

In some embodiments, referring to FIG. 20, FIG. 20 is a partial view of the first wall portion 13 provided in some embodiments of the present application. The first scoring groove 311 is a groove extending along a closed trajectory, and the first scoring groove 311 is disposed around the first pressure relief region 313.

As an example, as shown in FIG. 20, the first scoring groove 311 includes two first arc segments 3111 and two first straight line segments 3112. The two first straight line segments 3112 are disposed in parallel. One first arc segment 3111, one first straight line segment 3112, the other first arc segment 3111 and the other first straight line segment 3112 are connected end to end in sequence. The central angles of the two first arc segments 3111 are both 180°. The area of the first pressure relief region 313 (the predetermined pressure relief area of the first pressure relief mechanism 31) is S₁, and S₁ = a × b + π × a²/4. a is the distance between the inner side of one first straight line segment 3112 and the inner side of the other first straight line segment 3112, and b is the length of the first straight line segment 3112. Both a and b may be measured on the surface where the notch of the first scoring groove 311 is located.

In this embodiment, the first scoring groove 311 is a groove extending along a closed trajectory. During the opening process of the first pressure relief mechanism 31, the first pressure relief region 313 may be separated from the casing 1, increasing the pressure relief area of the first pressure relief mechanism 31 and improving the pressure relief rate of the battery cell 10.

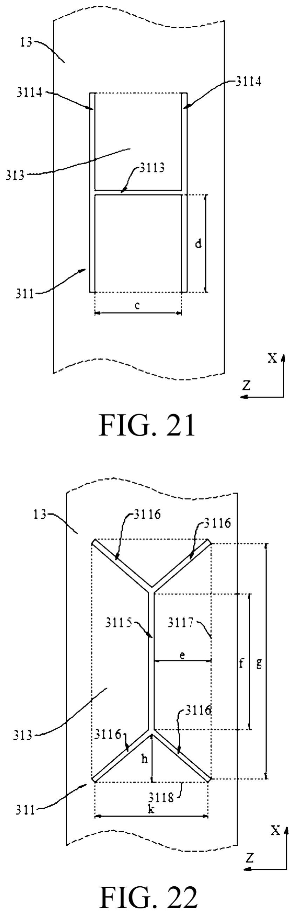

In some embodiments, referring to FIG. 21 and FIG. 22, FIG. 21 is a partial view of the first wall portion 13 provided by other embodiments of the present application; and FIG. 22 is a partial view of the first wall portion 13 provided by still other embodiments of the present application. The scoring groove is a groove extending along a non-closed trajectory.

As an example, as shown in FIG. 21, the first scoring groove 311 is an H-shaped groove. The first scoring groove 311 includes a second straight line segment 3113 and two third straight line segments 3114. The two third straight line segments 3114 are disposed in parallel. One end of the second straight line segment 3113 is connected to the midpoint position of one third straight line segment 3114, and the other end of the second straight line segment 3113 is connected to the midpoint position of the other third straight line segment 3114. The area of the first pressure relief region 313 (the predetermined pressure relief area of the first pressure relief mechanism 31) is S₁, and S₁ = 2 × c × d. c is the distance between the inner side of one third straight line segment 3114 and the inner side of the other third straight line segment 3114, and d is the distance between one end of the third straight line segment 3114 and the side of the second straight line segment 3113 facing the end. Both c and d can be measured on the surface where the notch of the first scoring groove 311 is located.

As an example, as shown in FIG. 22, the first scoring groove 311 is a double-Y-shaped groove. The first scoring groove 311 includes a fourth straight line segment 3115 and a fifth straight line segment 3116. Two ends of the fourth straight line segment 3115 are connected to two fifth straight line segments 3116 disposed at a non-zero angle. Along the length direction of the fourth straight line segment 3115, the two fifth straight line segments 3116 at one end of the fourth straight line segment 3115 are symmetrically disposed with the two fifth straight line segments 3116 at the other end of the fourth straight line segment 3115. Along the width direction of the fourth straight line segment 3115, the two fifth straight line segments 3116 on one side of the fourth straight line segment 3115 are symmetrically disposed with the two fifth straight line segments 3116 on the other side of the fourth straight line segment 3115. Along the length direction of the fourth straight line segment 3115, a connecting line of the free ends of the two fifth straight line segments 3116 is a first connecting line 3117; and along the width direction of the fourth straight line segment 3115, a connecting line of the free ends of the two fifth straight line segments 3116 is a second connecting line 3118. The area of the first pressure relief region 313 (the predetermined pressure relief area of the first pressure relief mechanism 31) is S₁, and S₁ = (f + g) × e + k × h. f is the length of the fourth straight line segment 3115, g is the length of the first connecting line 3117, e is the distance between the first connecting line 3117 and the side of the fourth straight line segment 3115 facing the first connecting line 3117, k is the length of the second connecting line 3118, and h is the distance between the connection position of the two fifth straight line segments 3116 at the end of the fourth straight line segment 3115 facing the second connecting line 3118 and the second connecting line 3118. All of f, g, e, k and h may be measured on the surface where the notch of the first scoring groove 311 is located.

In some embodiments, the second pressure relief mechanism 32 includes a second weak region and a second pressure relief region, and the second pressure relief region is configured to be opened when the second weak region cracks, and an area of the second pressure relief region is S₂.

The second weak region is a weaker region in the second pressure relief mechanism 32. The second weak region may be formed on the second pressure relief mechanism 32 in various ways. For example, annealing treatment is performed on a local region of the second pressure relief mechanism 32 to reduce the strength of this region, so as to correspondingly form the second weak region. Another example is to machine a groove on the second pressure relief mechanism 32 to correspondingly form the second weak region in the region of the groove.

The thickness of the second weak region and the thickness of the first weak region 312 may be equal or may be unequal. For example, the thickness of the first weak region 312 is less than the thickness of the second weak region.

The second pressure relief region may be a region defined by the second weak region. When the second weak region cracks, the second pressure relief region may be opened in a flipping or detaching manner. The area of the second pressure relief region is the predetermined pressure relief area of the second pressure relief mechanism 32.

In an embodiment where the second pressure relief mechanism 32 and the first wall portion 13 are integrally formed, the second weak region and the second pressure relief region and the first wall portion 13 may be integrally formed to realize the integral formation of the second pressure relief mechanism 32 and the first wall portion 13. In an embodiment where the second pressure relief mechanism 32 and the first wall portion 13 are separately disposed, the second pressure relief mechanism 32 may be an explosion-proof sheet in a sheet shape, and the explosion-proof sheet partially forms the second weak region.

When the second pressure relief mechanism 32 is started, the second pressure relief region can be opened with the second weak region as the boundary, increasing the pressure relief area of the second pressure relief mechanism 32.

In some embodiments, the second pressure relief mechanism 32 is provided with a second scoring groove 321, and the second pressure relief mechanism 32 forms the second weak region in a region provided with the second scoring groove 321.

In this embodiment, the second scoring groove 321 may be a groove extending along a closed trajectory; and the second scoring groove 321 may also be a groove extending along a non-closed trajectory. After the second pressure relief mechanism 32 is provided with the first scoring groove 311, a remaining portion of the second pressure relief mechanism 32 corresponding to the region of the first scoring groove 311 is the second weak region.

In this embodiment, the second weak region is formed by disposing the second scoring groove 321 on the second pressure relief mechanism 32, and the forming method of the second weak region is simple, reducing the forming difficulty of the second weak region.

In some embodiments, the second scoring groove 321 is a groove extending along a closed trajectory, and the second scoring groove 321 is disposed around the second pressure relief region.

In this embodiment, the shape of the second scoring groove 321 may be the same as that of the first scoring groove 311, the shape of the second pressure relief region may be the same as the shape of the first pressure relief region 313, and the calculation method of the second pressure relief region can be the same as the calculation method of the first pressure relief region 313, which will not be repeated here.

During the opening process of the second pressure relief mechanism 32, the second pressure relief region may be separated from the casing 1, increasing the pressure relief area of the second pressure relief mechanism 32 and improving the pressure relief rate of the battery cell 10.

In some embodiments, the second scoring groove 321 is a groove extending along a non-closed trajectory.

In this embodiment, the shape of the second scoring groove 321 may be the same as that of the first scoring groove 311. For example, both are H-shaped grooves or double-Y-shaped grooves. The shape of the second pressure relief region may be the same as the shape of the first pressure relief region 313, and the calculation method of the second pressure relief region may be the same as the calculation method of the first pressure relief region 313, which will not be repeated here.

In some embodiments, the predetermined pressure relief area of the first pressure relief mechanism 31 is S₁, and the predetermined pressure relief area of the second pressure relief mechanism 32 is S₂, satisfying: S₁-S₂ ≥ 50 mm².

S₁-S₂ may be any one point value or a range value between any two of 50 mm², 80 mm², 100 mm², 120 mm², 150 mm², 180 mm², 200 mm², and the like.

In this embodiment, S₁-S₂ ≥ 50 mm², which is beneficial for realizing that the first pressure relief mechanism 31 is started the valve earlier than the second pressure relief mechanism 32. When the battery cell 10 goes into thermal runaway, pressure may be relieved first through the first pressure relief mechanism 31 with a larger pressure relief area, reducing the risk of a rapid increase in pressure or temperature inside the casing 1 and improving the reliability of the battery cell 10.

In some embodiments, S₁-S₂ ≥ 100 mm².

In this embodiment, S₁-S₂ may be any one point value or a range value between any two of 100 mm², 110 mm², 120 mm², 130 mm², 140 mm², 150 mm², 160 mm², 170 mm², 180 mm², 190 mm², 200 mm², and the like.

The embodiment of the present application provides a battery 100 comprising the battery cell 10 provided in any one of the above embodiments.

An embodiment of the present application provides an electric device, including the battery cell 10 provided in any one of the above embodiments, where the battery cell 10 is configured to provide electrical energy for the electric device.

Referring to FIG. 3 and FIG. 4, an embodiment of the present application also provides a battery cell 10. The battery cell 10 includes a casing 1, an electrode assembly 2, a first pressure relief mechanism 31 and a second pressure relief mechanism 32. The electrode assembly 2 is accommodated in the casing 1. The first pressure relief mechanism 31 and the second pressure relief mechanism 32 are disposed on the casing 1. The first pressure relief mechanism 31 is started earlier than the second pressure relief mechanism 32. The casing 1 includes a shell 11 and two end caps 12. Openings are formed at two opposite ends of the shell 11 along a first direction X, and the two end caps 12 separately close the openings at the two ends of the shell 11. The electrode assembly 2 includes a main body portion 21 and tabs 22. Along the first direction X, tabs 22 are disposed at two opposite ends of the main body portion 21. One end cap 12 is provided with a first electrode terminal 41, and the other end cap 12 is provided with a second electrode terminal 42. The tab 22 at one end of the main body portion 21 is electrically connected to the first electrode terminal 41, and the tab 22 at the other end of the main body portion 21 is electrically connected to the second electrode terminal 42. The shell 11 includes a first wall portion 13 and a second wall portion 14. The first wall portion 13 supports the main body portion 21 along a gravitational direction. Both the first pressure relief mechanism 31 and the second pressure relief mechanism 32 are disposed on the first wall portion 13. A channel gap 17 is formed between the main body portion 21 and the second wall portion 14. The channel gap 17 is configured to communicate spaces inside the casing 1 at two ends of the main body portion 21 along the first direction X, and the first direction X is perpendicular to the gravitational direction.

Referring to FIG. 6 and FIG. 7, an embodiment of the present application also provides a battery cell 10. The battery cell 10 includes a casing 1, an electrode assembly 2, a first pressure relief mechanism 31 and a second pressure relief mechanism 32. The electrode assembly 2 is accommodated in the casing 1. The first pressure relief mechanism 31 and the second pressure relief mechanism 32 are disposed on the casing 1 at an interval. The first pressure relief mechanism 31 is started earlier than the second pressure relief mechanism 32. The casing 1 includes a shell 11 and two end caps 12. Openings are formed at two opposite ends of the shell 11 along a first direction X, and the two end caps 12 separately close the openings at the two ends of the shell 11. The electrode assembly 2 includes a main body portion 21 and tabs 22. Along the first direction X, tabs 22 are disposed at two opposite ends of the main body portion 21. One end cap 12 is provided with a first electrode terminal 41, and the other end cap 12 is provided with a second electrode terminal 42. The tab 22 at one end of the main body portion 21 is electrically connected to the first electrode terminal 41, and the tab 22 at the other end of the main body portion 21 is electrically connected to the second electrode terminal 42. The shell 11 includes a first wall portion 13 and a second wall portion 14 that are oppositely disposed. The first wall portion 13 supports the main body portion 21 along a gravitational direction. The first pressure relief mechanism 31 is disposed on the first wall portion 13, and the second pressure relief mechanism 32 is disposed on one end cap 12. A channel gap 17 is formed between the main body portion 21 and the second wall portion 14. The channel gap 17 is configured to communicate spaces inside the casing 1 at two ends of the main body portion 21 along the first direction X, and the first direction X is perpendicular to the gravitational direction.

Referring to FIG. 12, an embodiment of the present application also provides a battery cell 10, including a casing 1, an electrode assembly 2, a first pressure relief mechanism 31 and a second pressure relief mechanism 32. The electrode assembly 2 is accommodated in the casing 1. The first pressure relief mechanism 31 and the second pressure relief mechanism 32 are disposed on the casing 1 at an interval. The first pressure relief mechanism 31 is started earlier than the second pressure relief mechanism 32. The casing 1 includes a shell 11 and an end cap 12. An opening is formed at one end of the shell 11 along a first direction X, and the end cap 12 closes the opening of the shell 11. The electrode assembly 2 (not shown in FIG. 12) includes a main body portion 21 (not shown in FIG. 12) and tabs 22 (not shown in FIG. 12). Along the first direction X, two tabs 22 are disposed at one end of the main body portion 21 facing the end cap 12. The end cap 12 is provided with a first electrode terminal 41 and a second electrode terminal 42. One tab 22 is electrically connected to the first electrode terminal 41, and the other tab 22 is electrically connected to the second electrode terminal 42. The shell 11 includes a first wall portion 13. Along the first direction X, the first wall portion 13 is disposed opposite to the end cap 12. The first wall portion 13 supports the main body portion 21 along the gravitational direction. The first pressure relief mechanism 31 is disposed on the first wall portion 13, and the second pressure relief mechanism 32 is disposed on the end cap 12.

It should be noted that, without contradictory, the embodiments in the present application may be combined with the features in the embodiments.

The above embodiments merely illustrate the technical solutions of the present application and are not intended to limit the present application, and it is obvious to those skilled in the art that the present application may have various modifications and variations. Any modification, equivalent replacement, or improvement made without departing from the spirit and principle of the present application shall fall within the protection scope of the present application.

## Claims

1. A battery cell, comprising:
a casing configured to accommodate an electrode assembly; and
a first pressure relief mechanism and a second pressure relief mechanism disposed on the casing at an interval, wherein the first pressure relief mechanism is started earlier than the second pressure relief mechanism.

2. The battery cell according to claim 1, wherein a starting pressure of the first pressure relief mechanism is P₁, a starting pressure of the second pressure relief mechanism is P₂, and P₂-P₁ ≥ 0.02 MPa.

3. The battery cell according to claim 2, wherein 0.05 Mpa ≤ P₂-P₁ ≤ 0.5 Mpa.

4. The battery cell according to any one of claims 1-3, wherein the casing comprises a first wall portion, the first wall portion supports the electrode assembly along a gravitational direction, and at least one of the first pressure relief mechanism and the second pressure relief mechanism is disposed on the first wall portion.

5. The battery cell according to claim 4, wherein the first pressure relief mechanism is disposed on the first wall portion.

6. The battery cell according to claim 4 or 5, wherein the casing comprises:
a shell with openings formed at two opposite ends; and
two end caps separately closing the openings at the two ends of the shell,
wherein the first wall portion is formed on the shell.

7. The battery cell according to claim 6, wherein both the first pressure relief mechanism and the second pressure relief mechanism are disposed on the first wall portion.

8. The battery cell according to claim 6, wherein one of the first pressure relief mechanism and the second pressure relief mechanism is disposed on the first wall portion, and the other is disposed on one of the end caps.

9. The battery cell according to any one of claims 6-8, wherein the two end caps are oppositely disposed along a first direction, the electrode assembly comprises a main body portion and a tab, and along the first direction, at least one end of the main body portion is provided with the tab; and
the shell comprises a second wall portion, the second wall portion is disposed opposite to the first wall portion, the first wall portion supports the main body portion along the gravitational direction, a channel gap is formed between the second wall portion and the main body portion, the channel gap is configured to communicate spaces inside the casing at two ends of the main body portion along the first direction, and the first direction intersects with the gravitational direction.

10. The battery cell according to claim 4 or 5, wherein the casing comprises:
a shell with an opening formed at one end; and
an end cap closing the opening,
wherein the end cap is the first wall portion; or a wall portion of the shell opposite to the end cap is the first wall portion.

11. The battery cell according to claim 10, wherein one of the first pressure relief mechanism and the second pressure relief mechanism is disposed on the end cap, and the other is disposed on the wall portion of the shell opposite to the end cap.

12. The battery cell according to any one of claims 1-11, wherein the casing comprises the shell and the end cap, along the first direction, at least one end of the shell is formed with an opening, the end caps correspond to the openings one-to-one, and the end caps close the openings; and
the casing has a first half-region and a second half-region, along the first direction, a portion from a middle cross-section of the casing to one end of the casing is the first half-region, and a portion from the middle cross-section of the casing to the other end of the casing is the second half-region, and the middle cross-section is perpendicular to the first direction,
wherein the first pressure relief mechanism is disposed in the first half-region, and the second pressure relief mechanism is disposed in the second half-region.

13. The battery cell according to claim 12, wherein along the first direction, a length of the casing is L, and L ≥ 80 mm.

14. The battery cell according to claim 12 or 13, wherein along the first direction, the openings are formed at the two opposite ends of the shell, the two end caps separately close the openings at the two ends of the shell, and the two end caps are separately located in the first half-region and the second half-region; and
the first pressure relief mechanism and the second pressure relief mechanism are separately disposed on the two end caps; or both the first pressure relief mechanism and the second pressure relief mechanism are disposed on the shell; or the first pressure relief mechanism is disposed on the end cap located in the first half-region, and the second pressure relief mechanism is disposed on a portion of the shell located in the second half-region; or the first pressure relief mechanism is disposed on a portion of the shell located in the first half-region, and the second pressure relief mechanism is disposed on the end cap located in the second half-region.

15. The battery cell according to claim 14, wherein the battery cell further comprises a first electrode terminal and a second electrode terminal with opposite polarities, both the first electrode terminal and the second electrode terminal are electrically connected to the electrode assembly, and the first electrode terminal and the second electrode terminal are separately disposed on the two end caps.

16. The battery cell according to claim 12 or 13, wherein along the first direction, the opening is formed at one end of the shell, one of the first pressure relief mechanism and the second pressure relief mechanism is disposed on the end cap, and the other is disposed on the shell.

17. The battery cell according to claim 16, wherein along the first direction, the shell comprises the first wall portion disposed opposite to the end cap, one of the end cap and the first wall portion is located in the first half-region, and the other is located in the second half-region; and
one of the first pressure relief mechanism and the second pressure relief mechanism is disposed on the end cap, and the other is disposed on the first wall portion.

18. The battery cell according to claim 16 or 17, wherein the battery cell further comprises a first electrode terminal and a second electrode terminal with opposite polarities, both the first electrode terminal and the second electrode terminal are electrically connected to the electrode assembly, and both the first electrode terminal and the second electrode terminal are disposed on the end cap.

19. The battery cell according to any one of claims 1-7 and 10-13, wherein the casing comprises the first wall portion, both the first pressure relief mechanism and the second pressure relief mechanism are disposed on the first wall portion, the first pressure relief mechanism is provided with a first scoring groove, and the second pressure relief mechanism is provided with a second scoring groove; and
the first scoring groove and the second scoring groove are disposed at an interval along the first direction, along the first direction, the length of the casing is L, a maximum span of the first scoring groove is L₁, and a maximum span of the second scoring groove is L₂, and 0.2 ≤ (L₁+L₂)/L ≤ 0.6.

20. The battery cell according to any one of claims 1-7, 10-13 and 19, wherein the casing comprises the first wall portion, both the first pressure relief mechanism and the second pressure relief mechanism are disposed on the first wall portion, the first wall portion has a first outer surface facing away from the electrode assembly, an area of the first outer surface is S, a predetermined pressure relief area of the first pressure relief mechanism is S₁, and a predetermined pressure relief area of the second pressure relief mechanism is S₂, satisfying: 0.05 ≤ (S₁+S₂)/S ≤ 0.55.

21. The battery cell according to claim 20, wherein 0.15 ≤ (S₁+S₂)/S ≤ 0.35.

22. The battery cell according to claim 20 or 21, wherein the first pressure relief mechanism comprises a first weak region and a first pressure relief region, the first pressure relief region is configured to be opened when the first weak region cracks, and an area of the first pressure relief region is S₁.

23. The battery cell according to claim 22, wherein the first pressure relief mechanism is provided with the first scoring groove, and the first pressure relief mechanism forms the first weak region in a region provided with the first scoring groove.

24. The battery cell according to claim 23, wherein the first scoring groove is a groove extending along a closed trajectory, and the first scoring groove is disposed around the first pressure relief region.

25. The battery cell according to any one of claims 20-24, wherein the second pressure relief mechanism comprises a second weak region and a second pressure relief region, the second pressure relief region is configured to be opened when the second weak region cracks, and an area of the second pressure relief region is S₂.

26. The battery cell according to claim 25, wherein the second pressure relief mechanism is provided with the second scoring groove, and the second pressure relief mechanism forms the second weak region in a region provided with the second scoring groove.

27. The battery cell according to claim 26, wherein the second scoring groove is a groove extending along a closed trajectory, and the second scoring groove is disposed around the second pressure relief region.

28. The battery cell according to any one of claims 1-27, wherein the predetermined pressure relief area of the first pressure relief mechanism is S₁, and the predetermined pressure relief area of the second pressure relief mechanism is S₂, satisfying: S₁-S₂ ≥ 50 mm².

29. The battery cell according to claim 28, wherein S₁-S₂ ≥ 100 mm².

30. A battery, comprising the battery cell according to any one of claims 1-29.

31. An electric device, comprising the battery cell according to any one of claims 1-29, wherein the battery cell is configured to provide electric energy for the electric device.
